(19) **Europäisches Patentamt**

**European Patent Office**

**Office européen des brevets**

(11) **EP 1 108 317 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(21) Anmeldenummer: **99971182.3**

(22) Anmeldetag: **27.10.1999**

(51) Int Cl.⁷: **H04L 27/26**

(86) Internationale Anmeldenummer:
**PCT/EP99/08134**

(87) Internationale Veröffentlichungsnummer:
**WO 00/025492 (04.05.2000 Gazette 2000/18)**

(54) **KANALZUWEISUNGSVERFAHREN UND VORRICHTUNG FÜR KODIERTE UND KOMBINIERTE INFORMATIONSSÄTZE**

CHANNEL ALLOCATION METHOD AND DEVICE FOR CODED AND COMBINED INFORMATION SETS

PROCEDE D'ATTRIBUTION DE CANAUX ET DISPOSITIF POUR BLOCS DE DONNEES CODES ET COMBINES

(84) Benannte Vertragsstaaten:
**DE ES FR GB IT**

(30) Priorität: **27.10.1998 DE 19849553**

(43) Veröffentlichungstag der Anmeldung:
**20.06.2001 Patentblatt 2001/25**

(73) Patentinhaber: **SIEMENS AKTIENGESELLSCHAFT**
**80333 München (DE)**

(72) Erfinder: **MEISTER, Wolfgang**
**D-80333 München (DE)**

(74) Vertreter: **Schoppe, Fritz, Dipl.-Ing.**
**Patentanwälte Schoppe, Zimmermann, Stöckeler & Zinkler,**
**Postfach 71 08 67**
**81458 München (DE)**

(56) Entgegenhaltungen:
**EP-A- 0 742 654          EP-A- 0 753 948**
**US-A- 3 792 355**

• **LINDNER J: "CHANNEL CODING AND MODULATION FOR TRANSMISSION OVER MULTIPATH CHANNELS" ARCHIV FUR ELEKTRONIK UND UBERTRAGUNGSTECHNIK,S.HIRZEL VERLAG. STUTTGART,DE, Bd. 49, Nr. 3, 1. Mai 1995 (1995-05-01), Seiten 110-119, XP000590761 ISSN: 0001-1096 in der Anmeldung erwähnt**

EP 1 108 317 B1

**Beschreibung**

Die vorliegende Erfindung bezieht sich auf eine Vorrichtung und ein Verfahren zum Senden und auf eine Vorrichtung und ein Verfahren zum Empfangen und insbesondere auf ein Mehrkanalkonzept, bei dem unterschiedliche Codierverfahren zum Einsatz kommen.

Die hochratige Datenübertragung in bestehenden Telefonnetzen zwischen Vermittlungsstelle und Endstelle gewinnt mit der Einführung neuer Internet-Dienste zunehmend an Bedeutung. Aus Kostengründen stehen hierfür vorerst nur die vorhandenen Cu-Kabel zur Verfügung. Diese wurden ursprünglich jedoch ausschließlich für die Übertragung niederfrequenter Sprachsignale dimensioniert und weisen ein ausgeprägtes Tiefpaßverhalten auf. Mittels entsprechender Leitungscodes gelingt die Übertragung von 144 kBit/s über Entfernungen bis etwa 5 km (ISDN-Basisanschluß) und, abhängig von der Qualität des Kabels und der vorhandenen Störumgebung, von 2 Mbit/s über Entfernungen von 2 - 3 km (ISDN-Primärgruppenanschluß). Bei diesen Verfahren kommen niederstufige, meist ternäre oder quaternäre, Codierverfahren zur Anwendung.

Wegen der mit der Frequenz stark zunehmenden Leitungsdämpfung und der starken Zunahme von Störungen zwischen einzelnen benachbarten Leitungspaaren eines Kabels eignen sich die erwähnten Verfahren mit ihren Leitungscodes jedoch nicht zur Übertragung noch höherer Bitraten.

Zur Übertragung höherer Datenraten wurden in jüngster Vergangenheit die aus der Theorie seit langem bekannten Vielträgerverfahren oder Multiträgerverfahren mit spektraler Anpassung an den Übertragungskanal für den praktischen Einsatz entwickelt. Diese Verfahren ermöglichen durch ihre virtuelle Aufteilung des Übertragungskanals in zahlreiche einzelne Teilkanäle eine bessere Ausnutzung des Übertragungskanals.

Im Folgenden wird zunächst eine Beschreibung herkömmlicher OFDM- (Orthogonal Frequency Division Multiplexing) bzw. DMT-(Discrete Multi Tone) Verfahren gegeben, in der dargelegt wird, daß bei diesen Verfahren eine bestimmte Information jeweils genau über eine Trägerfrequenz, d.h. einen Teilkanal übertragen wird.

Die Bitfehlerwahrscheinlichkeit eines digitalen Übertragungssystems wird wesentlich durch das gewählte Modulationsverfahren einerseits sowie durch die beim Empfänger dem Empfangssignal überlagerten Störungen andererseits bestimmt. Die Wahl des Modulationsverfahrens bestimmt dabei die mit jedem Modulationssymbol übertragbaren Bits. Teilkanäle im unteren Frequenzbereich weisen aufgrund der niedrigen Leitungsdämpfung und des geringeren Übersprechens zwischen benachbarten Aderpaaren beim Empfänger ein wesentlich höheres Signal/Rausch-Verhältnis (S/R-Verhältnis; S/R = Carrier/Noise) auf als Teilkanäle in höheren Frequenzbereichen. Hierdurch wird es möglich, in niederfrequenten Teilkanälen durch Anwendung höherstufiger Modulationsverfahren mehr Information je Modulationssymbol zu übertragen. Insgesamt ergibt sich damit eine höhere Gesamtübertragungsrate. Bei xDSL-Übertragungsverfahren (DSL = Digital Subscriber Line) kommen ausschließlich $2^x$-QAM-Modulationsverfahren (QAM = Quadratur-Amplituden-Modulation) zur Anwendung. Bei diesen Modulationsverfahren wird eine bestimmte Anzahl von Bits einem cos-Träger und einem sin-Träger mit einer Frequenz durch Amplitudenmodulation aufgeprägt. Die Anzahl x der Informationen in Bit, welche einer Trägerschwingung bei der Modulation mittels eines 2x-stufigen Modulationsverfahrens aufgeprägt werden, wird als Bitloadingfaktor bzw. Bitloading bezeichnet.

Bei xDSL-Verfahren ist durch geeignete Wahl der Aussendungsdauer und des Frequenzabstandes der einzelnen Trägerschwingungen sichergestellt, daß zumindest im Fall einer verzerrungsfreien Übertragung zwischen allen Trägerschwingungen hinreichend Orthogonalität besteht. Dies ermöglicht es, daß die einzelnen Trägerschwingungen als unabhängige Teilkanäle innerhalb des gesamten Übertragungskanals betrachtet werden können. Die Erzeugung der einzelnen sin- und cos-Trägerschwingungen geschieht nun nicht durch getrennte Modulation von N separat erzeugten Trägerschwingungen sondern insgesamt durch inverse diskrete Fourier-Transformation (IDFT) eines Vektors t mit N komplexwertigen Komponenten.

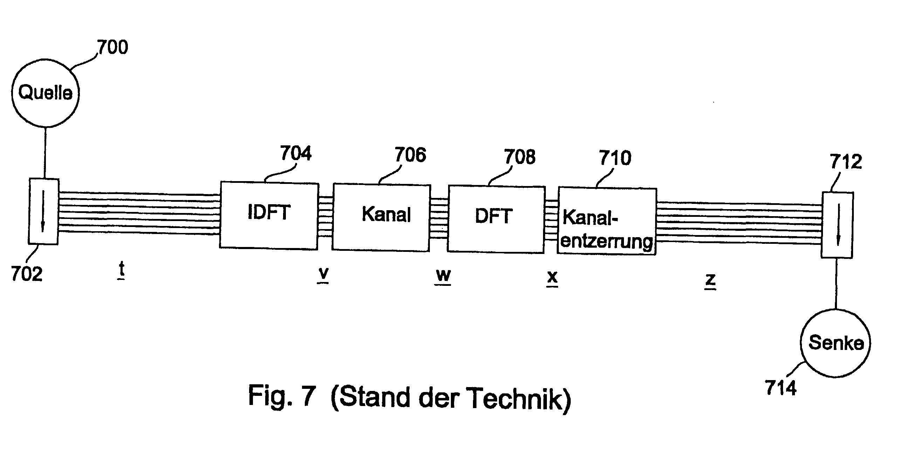

Fig. 7 der vorliegenden Erfindung zeigt eine herkömmliche OFDM-Übertragungsstrecke bzw. eine herkömmliche DMT-Übertragungsstrecke. Die Übertragungsstrecke weist eine Quelle 700 auf, die eine Folge von Informationssymbolen aussendet. Durch eine Einrichtung 702 zum Gruppieren werden jeweils M von der Quelle 700 gelieferte Informationssymbole zusammengefaßt und auf die N Komponenten eines Vektors t abgebildet. Dabei gilt im allgemeinen M ungleich N, und bei der Abbildung wird durch eine entsprechende Codierung, d.h. eine geeignete Gewichtung und Zuordnung zu den einzelnen Komponenten des Vektors t die Wahl des Modulationsverfahrens berücksichtigt. Ein bestimmtes Informationssymbol wird dabei genau einer Komponente des Vektors t zugeordnet. Der Einrichtung 702 zum Gruppieren folgt eine Einrichtung 704 zum Aufprägen der Informationssymbole bzw. der Komponenten des Vektors t auf die entsprechenden Trägerfrequenzen des Übertragungskanals. Jede Komponente des Vektors t wird dabei genau einer Trägerschwingung mittels einer inversen Fourier-Transformation (IDFT) aufgeprägt. Man erhält ein moduliertes Signal v, das über einen verzerrenden Übertragungskanal 706 übertragen wird, an dessen Ende ein verzerrtes Signal w austritt, dessen Träger oder Komponenten durch den Kanal abhängig von ihrer Trägerfrequenz unterschiedlich verzerrt werden.

Das Signal w wird durch eine Einrichtung 708 zum Extrahieren, d. h. eine Einrichtung zum Durchführen einer diskreten Fourier-Transformation (DFT), demoduliert, um die Informationssymbole bzw. die einzelnen Trägerschwingungen mit den ihnen aufgeprägten Informationssymbolen, zu extrahieren. Anschließend wird in einer Einrichtung 710 zum Entzerren bzw. in einem Kanalentzerrer die frequenzabhängige, durch den Übertragungskanal bedingte, Verzerrung des Signals soweit nötig und/oder möglich ausgeglichen, um ein entzerrtes Signal z zu erhalten, das durch eine Einrichtung 712 zum Aufheben der Gruppierung wieder in eine Folge von Informationssymbolen umgewandelt und zu einer Senke 714 bzw. einem Empfänger (dem Adressaten der Nachricht) weitergegeben wird.

Der gültige Standard für das Übertragungsverfahren ADSL (ADSL = Advanced Digital Subscriber Line) sieht z. B. die Aufteilung des Frequenzbereichs 26 kHz bis 1104 kHz in insgesamt 248 Teilkanäle mit je 4,35 kHz Bandbreite vor. Für die Übertragung in den tieffrequenten Teilkanälen sieht der Standard dann die Anwendung eines $2^{15}$-QAM-Modulationsverfahrens mit einer Informationsrate bzw. einem Bitloading von 15 Bit/Modulationssymbol vor, wohingegen in den obersten Teilkanälen lediglich ein 4-QAM-Modulationsverfahren mit einer Informationsrate von 2 Bit/Modulationssymbol zur Anwendung kommt. Die Stufenzahl der in den einzelnen Teilkanälen zur Anwendung kommenden Modulationsverfahren erniedrigen sich entsprechend dem mit der Frequenz abnehmenden S/R-Verhältnis. Insgesamt ergibt sich eine Brutto-Übertragungsrate von ca. 8 Mbit-s innerhalb eines Frequenzbereichs von 26 kHz bis 1104 kHz, was einer Bandbreiteneffizienz von etwa 7,6 Bit/Hz entspricht. Legt man die im Standard angeführten Kabelkonfigurationen zugrunde, so ergibt sich, abhängig von der Leistungsdämpfung und der übertragenen Datenrate, eine überbrückbare Entfernung von ca. 6 km.

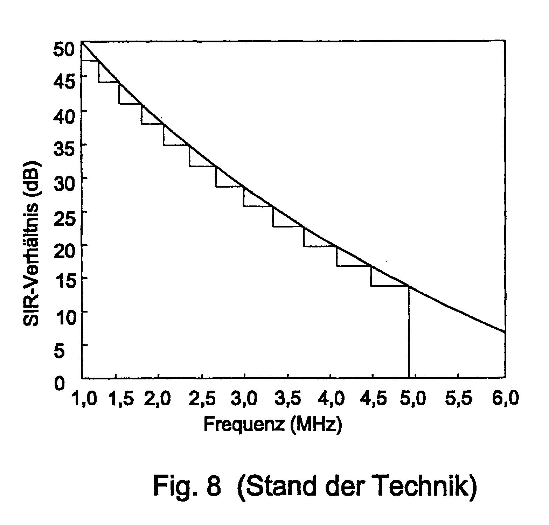

Fig. 8 zeigt das S/R-Verhältnis des Kanals als Funktion der Frequenz, das die obere Frequenzgrenze der Teilkanäle bestimmt, und die nutzbare Trägerbelegung beim herkömmlichen OFDM-Verfahren bzw. DMT-Verfahren. Die kontinuierlich abfallende Kurve in Fig. 8 gibt das sich aufgrund der Kabeldämpfung ergebende S/R-Verhältnis über der Frequenz wieder. Dabei wird von einem Störgeräusch mit konstanter spektraler Störleistungsdichte $N_0$ ausgegangen. Die treppenförmig absteigende Kurve gibt das bei Verwendung eines $2^x$-Modulationsverfahrens nutzbare S/R-Verhältnis an. Der abrupte Abbruch der Treppenkurve resultiert aus der Tatsache, daß auch beim angewendeten niederstufigen Modulationsverfahren 4-QAM (oder auch 2-QAM) ein gewisses minimales S/R-Verhältnis gegeben sein muß, um eine bestimmte Bitfehlerrate sicherzustellen. Dieser Wert ergibt sich u.a. aus der gewünschten Zuverlässigkeit der Übertragung und dem gewünschten Implementierungsaufwand für die FEC (Forward Error Correction = Vorwärtsfehlerkorrektur). Dieses minimale S/R-Verhältnis für das niederststufige Modulationsverfahren wird im Rahmen dieser Beschreibung als Implementierungsmargin bezeichnet. In Fig. 8 wird beispielhaft ein Wert von 14 dB zugrunde gelegt.

Ein Nachteil des oben beschriebenen Verfahrens besteht darin, daß trotz der spektralen Effizienz von ca. 7,6 Bit/Hz das Verfahren für die digitale Signalverarbeitung eine Digital-Analog- und Analog-Digital-Wandlung mit einer Genauigkeit von deutlich mehr als 2 x 7 Bit, d.h. eine Signalraumquantelung von mehr als $2^{15}$, erfordert, was dem Doppelten der tatsächlichen Bandbreiteneffizienz des Übertragungsverfahrens entspricht. Diese Genauigkeit ist erforderlich, damit die gesamte in den unteren Teilkanälen übertragene Information fehlerfrei codiert und decodiert werden kann.

Ein weiterer Nachteil des oben beschriebenen Verfahrens besteht darin, daß die Digital-Analog- und Analog-Digital-Wandlung mit mindestens der doppelten Frequenz des obersten Teilkanals erfolgen muß. Es ergeben sich daher gravierende Implementierungsnachteile.

Ein weiterer Nachteil des oben beschriebenen Verfahrens besteht darin, daß die gesamte Signalverarbeitung bis zum Entscheider, z. B. die erforderliche Fourier-Transformation, mit einer numerischen Genauigkeit durchgeführt werden muß, bei der sichergestellt ist, daß auftretende Rundungsfehler die einwandfreie Erfassung der Information in niederfrequenten Teilkanälen nicht beeinträchtigen.

Ein weiterer Nachteil des oben beschriebenen Verfahrens besteht darin, daß sich die für die einzelnen Teilkanäle verwendeten Modulationsverfahren nur in Schrittweiten von Potenzen von 2 anpassen lassen. Mithin kann erst dann von einem $2^x$-stufigen Modulationsverfahren auf ein $2^{x+1}$-stufiges Modulationsverfahren übergegangen werden, wenn sich das S/R-Verhältnis im jeweiligen Teilkanal um den Faktor 2 erhöht hat. Eine geringere Erhöhung des S/R-Verhältnisses kann nicht genutzt werden.

In der Fachveröffentlichung "Channel Coding and Modulation for Transmission over Multipath Channels", Jürgen Lindner, AEÜ, Band 49, Nr. 3, 1995, Seiten 110-119 sind verschiedene Verfahren zur Kanalcodierung und Modulation bei einer Übertragung über Mehrwegekanäle beschrieben. Angenommen wird eine codierte Modulation zusammen mit einer linearen Blockmodulation mit orthogonalen Funktionen. Dies beinhaltet zum einen übliche Mehrträgerverfahren gemäß der OFDM Technik, sowie deren Verallgemeinerung, was als OCDM-Verfahren bezeichnet wird, wobei das "C" für "Codieren" steht. Beim OCDM-Verfahren wird die "Last der Übertragung" über alle OFDM-Teilkanäle übertragen, indem der Vektor, der sämtliche über alle Kanäle parallel zu übertragenden Symbole umfaßt, mit einer unitären Matrix multipliziert wird. Jeder OFDM-Teilkanal trägt nun einen Teil jeder Komponente des Vektors, d. h. jedes Symbols. Ein entsprechender Algorithmus auf der Empfangsseite umfaßt eine Matrixmultiplikation mit einer zur Matrix im Sender konjugiert komplex transponierten Matrix. Dadurch, daß alle Symbole, die parallel über einen Übertragungskanal übertragen werden, miteinander verbunden werden, wird auch die gesamte Rauschleistung des Kanals nach einer inversen Kombination im Empfänger auf alle Teilkanäle gleichmäßig verteilt.

Nachteilig an diesem Verfahren ist die Tatsache, daß es nicht auf Modulationsverfahren anwendbar ist, die in Fig. 7 und Fig. 8 beschrieben sind. Verschiedene Teilkanäle erfordern aufgrund der unterschiedlichen Signal/Rausch-Verhältnisse unterschiedliche Codierverfahren, damit ein über diesen Kanal übertragenes Symbol mit einer bestimmten Zuverlässigkeit im Empfänger decodiert werden kann. Eine Vergleichmäßigung über den gesamten Übertragungskanal würde daher dazu führen, daß lediglich die Träger mit höheren Trägerfrequenzen, für die Codierverfahren zum Einsatz gekommen sind, die relativ wenig Informationen zuweisen, wieder korrekt decodiert werden können, während niederfrequentere Träger, bei denen höherstufige Codierverfahren zum Einsatz gekommen sind, aufgrund einer Verletzung des Grenz-Signal/Rausch-Verhältnisses, d. h. des signal/Rausch-Verhältnisses, das minimal erforderlich ist, um eine korrekte Decodierung mit vorbestimmter Zuverlässigkeit dieses Teilkanals zu erreichen, nicht mehr korrekt decodiert werden können, was zu gravierenden Informationsverlusten führen wird.

Ein weiteres Problem bei dem bekannten Verfahren der Kombination aller Träger miteinander besteht darin, daß ein Übertragungskanal, der einen oder mehrere Frequenzbereiche aufweist in denen eine sehr hohe Dämpfung und/oder eine sehr hohe Störleistung auftritt, zu einem vollkommenen Informationsverlust im gesamten Übertragungskanal führen kann, wenn als Ergebnis der inversen Kombination im Empfänger das resultierende gemittelte Signal/Rausch-Verhältnis unter einen bestimmten Wert sinkt. Anders ausgedrückt können sehr wenige, sehr schlechte Teilkanäle die Bitfehlerrate beim Decodieren aller Teilkanäle unter einen geforderten Minimalwert absinken lassen. Abhilfe dagegen kann nur erreicht werden, wenn entweder die Sendeleistung in allen Teilkanälen erhöht wird, oder wenn ein Codierverfahren zum Einsatz kommt, das einem Informationssymbol weniger Informationen zuweist, derart, daß das Grenz-Signal/Rausch-Verhältnis für ein Decodieren mit einer geforderten Mindest-Zuverlässigkeit ausreicht.

Diese beiden Möglichkeiten sind jedoch nicht wünschenswert, da eine Erhöhung der Sendeleistung unter Umständen nicht durchführbar ist, z.B. im Falle einer vorgegebenen maximalen spektralen Leistungsdichte des Sendesignals oder einer vorgegebenen maximalen Gesamtleistung des Sendesignals, oder daß der Anwendungsfall eine bestimmte Mindestübertragungsrate erfordert, die bei Verwendung niederstufiger Modulationsverfahren dann nicht mehr erreicht werden kann.

Die EP 0 753 948 A offenbart ein Verfahren zur Kapazitätszuordnung für die OFDM. Ein Mapper wird mit zu sendenden Datenelementen gespeist, um einzelnen Datenelemente auf einen Satz von z.B. 256 Trägern zu verteilen, wobei jede Information immer genau einem Träger aufgeprägt wird. Hierzu wird ein Verteilungsalgorithmus eingesetzt. Zunächst wird die Rauschleistung für jeden Träger gemessen. Dann werden die Träger fiktiv angeordnet, so daß die Träger in aufsteigender Reihenfolge hinsichtlich der gemessenen Rauschleistung erscheinen. Anschließend werden die zu sendenden Datenelemente klassifiziert. Diese Klassifikation findet anhand der Daten, die durch die Datenelemente dargestellt werden, statt, z.B. ob die Daten sich beispielsweise auf Telefonbanking oder auf übliche Telefonierdaten beziehen. Telefonbanking-Daten müssen unbedingt vollständig ungestört ankommen, während übliche Telefondaten aufgrund der ungleich höheren Redundanz von Telefongesprächen ohne weiteres ein paar Störungen erleiden dürfen. Die Daten werden dann in sog. schnelle Daten und in sog. verschachtelte Daten aufgeteilt. Telefonbanking-Daten sind verschachtelte Daten, während schnelle Daten Telefongesprächsdaten sind. Hierauf werden auch die Träger in zwei Teilsätze eingeteilt. Dann werden die Datenelemente jedes Satzes von Datenelementen zu den Trägern jedes Satzes von Trägern zufällig zugeordnet. Schließlich werden die Datenelementzuordnungen innerhalb jeder Gruppe equalisiert, und zwar mit dem ziel, daß jeder Träger eine möglichst hohe Signal/Rausch-Reserve hat. Hierzu werden einzelne Datenelemente von Trägern je nach Signal/Rausch-Reserve von einem Träger weggenommen und zu einem anderen Träger hinzugegeben. Der Algorithmus gibt eine Strategie an, jede Information genau einem vom Algorithmus bestimmten Träger aufzuprägen.

Die EP 0 742 654 A1 offenbart einen Sender für von analogen Fernsehsignalen abgeleitete numerische Si-gnale und einen Empfänger für solche gesendeten Signale. Teilträger einer OFDM-Modulation können unter Verwendung unterschiedlicher Codierverfahren, wie z.B. eines 4-PSK-Codierverfahrens, eines 16-QAM-Codierverfahrens oder eines 64-QAM-Codierverfahrens codiert werden. Alternativ kann ein höherstufiges Codierverfahren und dann ein Faltungscode mit einer Coderate 1/2 für bestimmte Unterträger oder ein Faltungscode mit einer Coderate von 5/6 für andere Unterträger eingesetzt werden.

Die Aufgabe der vorliegenden Erfindung besteht darin, eine Vorrichtung und ein verfahren zum Senden einer Folge von Informationssymbolen sowie eine Vorrichtung und ein Verfahren zum Empfangen eines gesendeten Signals zu schaffen, die eine gute Ausnutzung der verfügbaren Kapazität des Übertragungssignals bei einfacher Implementierung ermöglicht.

Diese Aufgabe wird durch eine Vorrichtung zum Senden nach Patentanspruch 1, für eine Vorrichtung zum Empfangen nach Patentanspruch 16, durch ein Verfahren zum Senden nach Patentanspruch 21 und durch ein Verfahren zum Empfangen nach Patentanspruch 22 gelöst.

Der vorliegenden Erfindung liegt die Erkenntnis zugrunde, daß durch Vergleichmäßigung des Verlaufs der Rauschleistungsdichte bzw. Störleistungsdichte bzw. durch eine vergleichmäßigung des Signal/Rausch-Verhältnisses in jeweiligen Sätzen von Teilkanälen eines gestörten Übertragungskanals bzw. durch die Verteilung der zu übertragenden Informationen in Sätzen von Teilkanälen eines Gesamtübertragungskanals sich eine bessere Ausnutzung der verfügbaren Kapazität des Übertragungskanals erzielen läßt, und so einerseits eine Erhöhung der Zuverlässigkeit der übertragenen Information ermöglicht wird.

Das erfindungsgemäße Konzept zeichnet sich einerseits dadurch aus, daß bereits beim Senden der Übertragungskanal derart berücksichtigt wird, daß zumindest zwei unterschiedliche Codierverfahren zum Einsatz kommen, die sich in der Informationsmenge unterscheiden, die sie einem Informationssymbol zuweisen, und daß die Codierverfahren bei der Kombination der codierten Informationssymbole aus den jeweiligen Teilsätzen berücksichtigt werden. Dies äußert sich darin, daß nur Teilkanäle innerhalb eines Satzes von Teilkanälen miteinander kombiniert werden, d. h. daß nur Teilkanäle miteinander kombiniert werden, die mit dem gleichen Codierverfahren codiert worden sind. Die Vergleichmäßigung des Signal/Rausch-Verhältnisses findet somit nicht über den gesamten Übertragungskanal statt, sondern an den Kanal angepaßt, bzw. an die verschiedenen Codierverfahren angepaßt. Das Vergleichmäßigen in den beiden Teilsätzen, d. h. das Kombinieren der codierten Informationssymbole in den einzelnen Sätzen von Teilkanälen führt dazu, daß jeder Satz von Teilkanälen zumindest einen Teilkanal aufweist, dessen Signal/Rausch-Verhältnis ohne den Schritt des Kombinierens kleiner als ein Grenz-Signal-Rausch-Verhältnis sein würde, das für das von dem Satz, zu dem dieser Teilkanal gehört, verwendete Codierverfahren minimal erforderlich ist, um eine vorbestimmte Zuverlässigkeit beim Decodieren der Informationssymbole zu erhalten, und dessen Signal/Rausch-Verhältnis aufgrund des Schritts des Kombinierens größer oder gleich diesem Grenz-Signal/Rausch-Verhältnis ist.

Üblicherweise wird ein Grenz-Signal/Rausch-Verhältnis dadurch definiert sein, daß ein Decodierer im Empfänger die codierten Informationssymbole mit einer Bitfehlerrate decodieren kann, die unterhalb einer maximal zulässigen Bitfehlerrate ist. Selbstverständlich ist dieser Wert je nach Anwendungsfall variabel, je nachdem, welche Empfangsqualität im Empfänger gefordert ist.

Es sei darauf hingewiesen, daß zur Anwendung des erfindungsgemäßen Verfahrens in seiner allgemeinsten Form keine exakte Kenntnis des Übertragungskanals erforderlich ist, sondern lediglich eine grobe Schätzung des Übertragungskanals, um das Grenz-Signal/Rausch-Verhältnis für jeden Teilkanal zumindest grob einschätzen zu können. Je genauer der Übertragungskanal jedoch bekannt ist bzw. dynamisch gemessen wird, desto genauer können die veschiedenen Modulationsverfahren und die verschiedenen Sätze von Teilkanälen an den vorhandenen Übertragungskanal adaptiert werden und eine entsprechend höhere nutzbare Übertragungsrate wird sich im Ergebnis einstellen. Im Falle einer genauen Kenntnis des Übertragungskanals kann so mit dem Verfahren gemäß der vorliegenden Erfindung die übertragbaren Informationsrate gegenüber dem Stand der Technik deutlich erhöht werden. Selbst wenn der Kanal nur ganz grob abgeschätzt ist, ermöglicht die vorliegende Erfindung dennoch aufgrund der zumindest zwei verwendeten Codierverfahren in Verbindung mit den zumindest zwei verwendeten Kombinationsvorschriften bereits eine Kanai-angepaßte Übertragung, wobei die Datenrate des erfindungsgemäßen Sende/Empfangs-Konzepts bereits aufgrund der Tatsache, daß jeder Satz von Teilkanälen zumindest einen Teilkanal enthält, dessen Signal/Rausch-Verhältnis aufgrund des Kombinierens größer oder gleich einem Grenz-Signal-/Rausch-Verhältnis ist, womit zumindest auf diesen einen Teilkanal noch ein höherstufiges Codierverfahren angewendet werden kann, d. h. daß ihm mehr Information zugeordnet werden kann, als es beim Stand der Technik, der in Fig. 8 dargelegt ist, der Fall ist. Darüberhinaus ermöglicht das Verfahren gemäß der vorliegenden Erfindung eine Erhöhung der nutzbaren Gesamtbandbreite des Übertragungskanals, da der zumindest eine Teilkanal des zweiten Satzes von Teilkanälen beim bekannten Konzept bereits nicht mehr nutzbar ist, da für diesen Teilkanal ohne das Kombinieren im zweiten Teilsatz das Signal/Rausch-Verhältnis bereits kleiner als das Grenz-Signal/Rausch-Verhältnis war.

Das erfindungsgemäße Verfahren liefert eine hohe Flexibilität dahingehend, wie nahe bei der Vergleichmäßigen des Signal/Rausch-Verhältnisses in einem Satz von Teilkanälen an die Zuverlässigkeitsgrenze herangegangen wird. Anders ausgedrückt wird das Signal/Rausch-Verhältnis der Teilkanäle in einem Satz von Teilkanälen um so geringer, je mehr Teilkanäle beim Kombinieren berücksichtigt werden, ohne Kombinieren eine Übertragungsqualität aufweisen würden, die den Anforderungen des Codierverfahrens bei diesem Teilkanal nicht entsprechen würde. Es kann also immer ein guter Kompromiß zwischen Übertragungsrate und Zuverlässigkeit gewonnen werden.

Wird das Signal/Rausch-Verhältnis der Teilkanäle in einem Satz von Teilkanälen sehr nahe dem Grenz-Signal/Rausch-Verhältnis gewählt, so ist die Anzahl der Teilkanäle, in denen ein höherwertiges Codierverfahren verwendet werden kann, hoch, wodurch eine entsprechend höhere Datenrate realisierbar wird, was jedoch eine genauere Kenntnis des Kanals erforderlich macht. Wird dagegen die Anzahl der Teilkanäle, die im Vergleich zum bekannten Verfahren zusätzlich mit dem höherstufigen Codierverfahren codiert werden können, niedrig gewählt, so liegt das Signal/Rausch-Verhältnis der Teilkanäle in dem Satz von Teilkanälen deutlich über dem mindestens erforderlichen Grenz-Signal/Rausch-Verhältnis. In diesem Fall ist eine nicht so präzise Kenntnis des Übertragungskanals erforderlich, da auch Abweichungen des Übertragungsverhaltens nicht unmittelbar zu einem Absinken des Signal/Rausch-Verhältnisses unter das erforderliche Mindest-Signal/Rausch-Verhältnis und damit zu einem Verlust der in diesem Satz von Teilkanälen übertragenen Information führt. Selbst wenn im Falle eines nur grob bekannten Kanals ein "Übertragungsloch" auftritt, findet im schlimmsten Fall lediglich ein Gesamtverlust des Satzes von Teilkanälen statt, in dem das Übertragungsloch liegt. Die Teilkanäle des zumindest einen anderen Satzes sind davon jedoch nicht betroffen, da nicht über den gesamten Übertragungskanal kombiniert wurde, sondern lediglich innerhalb der Sätze von Teilkanälen. Es ist offensichtlich, daß dieser Kompromiß sehr stark anwendungsabhängig ist.

Sehr einfach an den gegebenen Anwendungsfall adaptierbar ist bei dem Verfahren gemäß der vorliegenden Erfindung die Anzahl der verwendeten unterschiedlichen Codierverfahren und Modulationsverfahren sowie die Anzahl der daraus resultierenden verwendeten Sätze von Teilkanälen. Ist als Optimierungskriterium des Anwendungsfalles einzig die Maximierung der übertragbaren Informationsrate vorgegeben, d.h. soll die zur Verfügung stehende Kanalkapazität ohne Beachtung weiterer Randbedingungen optimal ausgenutzt werden, so bietet sich die Verwendung einer größeren Anzahl von Sätzen von Teilkanälen an, wodurch sich eine optimale spektrale Anpassung an den vorhandenen Übertragungskanal ergibt. In diesem Falle wird die Aufteilung der Einzelkanäle zu den verschiedenen Sätzen von Teilkanälen derart vorgenommen, daß sich, unter Verwendung von Sätzen von Teilkanälen mit ggfl. sehr unterschiedlichen Bitloadingfaktoren, d.h. Codierverfahren, welche sich in der Signalraumquantelung entsprechend dem Anwendungsfall sehr stark unterscheiden können, als Ergebnis dieser Aufteilung eine optimale Anpassung an den Übertragungskanal und eine maximale übertragbare Informationsrate ergibt. Dies hat jedoch manchmal den Nachteil, daß sehr genaue A/D-Wandler bzw. Arithmetik-Einrichtungen verwendet werden müssen. Ist als Optimierungskriterium des Anwendungsfalles jedoch die einfache Implementierung der Signalverarbeitungseinrichtungen in Sender und Empfänger vorgegeben, so bietet das Verfahren gemäß der vorliegenden Erfindung die Möglichkeit einer Anpassung an den Übertragungskanal durch Verwendung von minimal 2 Sätzen von Teilkanälen mit verschiedenen Codierverfahren, z.B. mit einem ersten Satz von Teilkanälen, in dem ein $2^2$-QAM-Verfahren als Codierverfahren zur Anwendung kommt und einem zweiten Satz von Teilkanälen, in denen ein $2^3$-QAM-Verfahren zur Anwendung kommt. Das erfindungsgemäße Verfahren ermöglicht durch die Vergleichmäßigung eine Ausweitung des für die Übertragung nutzbaren Frequenzbereichs gegenüber dem Stand der Technik und so eine Steigerung der übertragbaren Informationsrate gegenüber Verfahren nach dem Stand der Technik.

Ebenfalls hohe Flexibilität ermöglicht die vorliegende Erfindung bezüglich der Belegung der Sätze von Teilkanälen. Im Falle einer Übertragung mit maximaler Datenrate wird die Anzahl der Sätze von Teilkanälen der Anzahl der maximal möglichen Codierverfahren entsprechen. Im Falle der Anforderung nach einfacher Implementierbarkeit, z.B. der Forderung der Verwendung von A/D- und D/A-Wandlern mit einer grobstufigen Amplitudenquantisierung, der Forderung nach einer einfachen Implementierung der numerischen Signalverarbeitung oder der Forderung nach Zulässigkeit größerer linearer oder nicht-linearer Signalverzerrungen wird die Anzahl der Sätze von Teilkanälen minimal sein und es werden Codierverfahren mit nur grober Quantisierung des Signalraumes zur Anwendung kommen, im Extremfall wird die Anzahl der Sätze von Teilkanälen gleich der erforderlichen minimalen Anzahl von 2 sein und es werden 2 verschiedene Codierverfahren, im Extremfall ein $2^2$-QAM- und ein $2^3$-QAM-Verfahren als Codierverfahren zur Anwendung kommen, wobei die obere Frequenzgrenze des ersten Satzes von Teilkanälen bzw. die untere Frequenzgrenze des zweiten Satzes von Teilkanälen wiederum je nach Anforderung festgelegt werden kann. Wird auf eine möglichst hohe Datenrate abgestellt, so wird die obere Frequenzgrenze des ersten Satzes von Teilkanälen möglichst hoch gewählt, derart, daß sämtliche Teilkanäle des ersten Satzes von Teilkanälen bzgl. des durch das Codierverfahren bestimmten Grenz-Signal/Rausch-Verhältnisses nur eine geringe Implementierungsmargin aufweisen. Die Genauigkeit, mit der dies durchgeführt werden kann, wird von der Genauigkeit bestimmt, mit der das Übertragungsverhalten des Gesamtkanals bekannt ist.

Ist von einem Übertragungskanal bekannt, daß er Teilkanäle mit schlechtem oder sehr schlechtem Übertragungsverhalten besitzt, so bietet es sich an, diese Teilkanäle von der Zuordnung zu den Sätzen von Teilkanälen und damit von der Übertragung auszuschließen. Hierdurch wird, abhängig vom genauen Übertragungsverhalten in den einzelnen Teilkanälen, eine andere Zusammenfassung der Sätze von Teilkanälen, verbunden mit einer Erweiterung des für die Übertragung nutzbaren Frequenzbereichs des Übertragungskanals möglich.

Das erfindungsgemäße Verfahren liefert somit auch dahingehend Flexibilität, daß nicht, wie im Stand der Technik, die Informationssymbole sämtlicher Träger miteinander kombiniert werden müssen, sondern daß auch Teilkanäle bzw. Träger zwischen zwei Sätzen von Teilkanälen "unbehandelt" bleiben können bzw. überhaupt nicht mit Informationen belegt werden. Dieses Konzept ist ferner derart erweiterbar, daß in einem Übertragungskanal mehrere Bänder nicht kombiniert werden.

Schließlich ist das erfindungsgemäße Sende/Empfangs-Konzept nicht nur auf Mehrträgerverfahren, wie z. B. OFDM-Verfahren, anwendbar, sondern auch auf andere Codierverfahren und Modulationsverfahren sowie andere Übertragungskanäle die Teilkanäle mit unterschiedlichem Übertragungsverhalten, d.h. unterschiedliche Übertragungsqualität, aufweisen, z.B. auf klassische Codierverfahren mit verschiedenstufigen Pulsamlitudenmodulationsverfahren sowie auf Übertragungskanäle mit zeitvariantem Übertragungsverhalten, d.h. zeitlicher Varianz der Übertragungsqualität der einzelnen Teilkanäle. Als Beispiele seien hier der Funkkanal sowie die verschiedenen Ausbreitungsmodi auf einer Vierdrahtleitung genannt.

Ein Vorteil der vorliegenden Erfindung besteht darin, daß dieselbe eine bessere Nutzung der Kapazität des Übertragungskanals bzw. der Teilkanäle des Übertragungskanals und damit eine höhere Übertragungsrate ermöglicht, insbesondere dann, wenn die zulässige spektrale Leistungsdichte des Sendesignals oder die Gesamtleistung des Sendesignals begrenzt ist.

Ein weiterer Vorteil der vorliegenden Erfindung besteht darin, daß der durch das Verfahren gewonnene Teil an Übertragungsrate ganz oder Teilweise als zusätzliche Redundanz zur Erhöhung der Zuverlässigkeit der Übertragung verwendet werden kann.

Ein weiterer Vorteil der vorliegenden Erfindung besteht darin, daß die Erhöhung der verfügbaren Übertragungsrate im gesamten Übertragungskanal bzw. in Teilkanälen des Übertragungskanals bei gegebener Übertragungsrate zur Reduzierung des maximal erforderlichen Bitloadingfaktors verwendet werden kann, und damit der Implementierungsaufwand und die Kosten, z. B. der A/D-Wandlung und der D/A-Wandlung, sowie der erforderliche Aufwand zur numerischen Signalverarbeitung reduziert werden können.

Ein weiterer Vorteil der vorliegenden Erfindung besteht darin, daß suboptimale Systeme mit sehr niedrigen Bitloadingfaktoren und großer Bandbreiteneffizienz zur Übertragung von Information über linear verzerrende gestörte Kanäle realisiert werden können.

Ein weiterer Vorteil der vorliegenden Erfindung besteht darin, daß Signale mit geringeren Bitloadingfaktoren verwendet werden können, was die Anwendung einer grobstufigeren Amplitudenquantisierung ermöglicht und in der Folge die Tolerierung größerer linearer oder nicht-linearer Signalverzerrungen gestattet.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Prinzipblockschaltbild des erfindungsgemäßen Sende/Empfangskonzepts am Beispiel einer Mehrträgermodulation mittels des OFDM-Verfahrens;

Fig. 2 eine graphische Darstellung des Bandbreitengewinns durch das erfindungsgemäße Sendekonzept;

Fig. 3 das für eine bestimmte Empfangszuverlässigkeit minimale Signal/Rausch-Verhältnis des Übertragungskanals als Funktion der Frequenz sowie die Grenz-Signal/Rausch-Verhältnisse der einzelnen Codierverfahren und die nutzbare Trägerbelegung gemäß einem Ausführungsbeispiel der vorliegenden Erfindung;

Fig. 4 einen Vergleich der erfindungsgemäßen Trägerbelegung von Fig. 4 und der Trägerbelegung beim herkömmlichen DMT-Verfahren, die in Fig. 8 skizziert ist;

Fig. 5 das für eine bestimmte Empfangszuverlässigkeit minimale Signal/Rausch-Verhältnis des Übertragungskanals als Funktion der Frequenz sowie die Grenz-Signal/Rausch-Verhältnisse der einzelnen Codierverfahren und die nutzbare Trägerbelegung gemäß einem anderen Ausführungsbeispiel der vorliegenden Erfindung, bei dem geringe Bitloadingfaktoren erwünscht sind;

Fig. 6 die erreichbare Datenrate in Abhängigkeit von dem maximalen Bitloadingfaktor für die in Fig. 8 skizzierte herkömmliche Trägerbelegung, für die in Fig. 3 skizzierte erfindungsgemäße Trägerbelegung gemäß dem ersten Ausführungsbeispiel und für die in Fig. 5 skizzierte erfindungsgemäße Trägerbelegung gemäß dem zweiten Ausführungsbeispiel;

Fig. 7 eine herkömmliche OFDM-Übertragungsstrecke; und

Fig. 8 das für eine bestimmte Empfangszuverlässigkeit minimale Signal/Rausch-Verhältnis des Übertragungskanals als Funktion der Frequenz sowie die Grenz-Signal/Rausch-Verhältnisse der einzelnen Codierverfahren und die nutzbare Trägerbelegung gemäß dem bekannten OFDM-Konzept von Fig. 7.

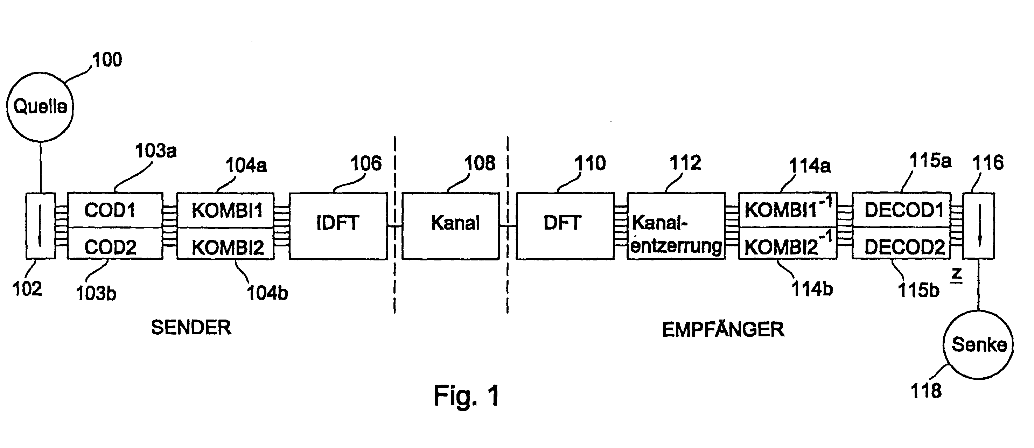

Fig. 1 zeigt eine Gesamtübersicht über das erfindungsgemäße Sende/Empfangs-Konzept. Im linken Teil von Fig. 1 befindet sich eine Vorrichtung zum Senden von Informationen aus einer Quelle 100, die eine Einrichtung 102 zum Gruppieren der Informationen und Umwandeln dieser Informationen in, dem später verwendeten Codierverfahren entsprechende, Signalwerte, im allgemeinsten Fall zum Seriell/Parallel-Wandeln, hat, sowie eine erste Codiereinrichtung 103a, eine zweite Codiereinrichtung 103b, eine erste Kombinationseinrichtung 104a, eine zweite Kombinationseinrichtung 104b sowie eine Einrichtung zum Zuordnen der kombinierten codierten Informationssymbole zu den Teilkanälen, welche im Falle eines OFDM-Verfahrens eine Einrichtung zum Durchführen einer inversen diskreten Fouriertransformation sein kann, die in Fig. 1 mit einem Bezugszeichen 106 bezeichnet ist.

Wie es noch ausgeführt werden wird, ordnen das erste und das zweite Codierverfahren sowie im Falle von mehr als zwei Codierverfahren die entsprechenden weiteren Codierverfahren den jeweiligen erzeugten codierten Informationssymbolen bestimmte - von Codierverfahren zu Codierverfahren - unterschiedliche Mengen von Informationen zu. Wenn der beispielhafte Fall betrachtet wird, bei dem die Informationen in Bits vorliegen, so unterscheiden sich die Informationsmengen in der Anzahl der Bits. Die Einrichtung 102 zum Gruppieren wird dann die Informationsbits derart auf die Teilkanäle verteilen, daß für jeden Teilkanal die für das hier vewendete Codierverfahren erforderliche Anzahl von Informationsbits gruppiert ist. Werden Teilkanäle beispielsweise einem $2^2$-QAM-Codierverfahren unterzogen, so wird die Gruppierungseinrichtung jedem dieser Teilkanäle 2 Informationsbits liefern. Werden Teilkanäle dagegen beispielsweise einem $2^5$-QAM-Codierverfahren unterzogen, so wird die Gruppierungseinrichtung jedem dieser Teilkanäle 5 Informationsbits liefern. Das codierte Informationssmbol, das durch den Codierer erzeugt wird, hat also im ersten Fall eine Menge von 2 Informationsbits zugeordnet und im zweiten Fall eine Menge von 5 Informationsbit. Die Gruppierungseinrichtung ist also wirksam, um jedem verwendeten Teilkanal die Informationsmenge zuzuordnen, die er aufgrund des für diesen Teilkanal vorgesehenen Codierverfahrens haben soll.

Das Ausgangssignal der Einrichtung 106 wird über den Kanal 108 zum Eingang des Empfängers übertragen. Dieser Kanal kann dabei in verschiedenen Realisierungsformen vorliegen, z.B. könnte es sich um einen Kabelkanal in Form einer Telephonanschlußleitung oder einer Energieversorgungsleitung handeln oder auch um einen Funkkanal. Fig. 8 müßte in diesen Fällen um Einrichtungen zur Anpassung des Sendesignals und des Empfangssignals an einen solchen Kanal ergänzt werden. Durch die Übertragung über den Kanal wird das Signal gedämpft und verzerrt. Zusätzlich werden dem Signal additiv verschiedene Störungen überlagert. Das Ausgangssignal des Kanals, bezeichnet mit w, bildet das Eingangssignal der Einrichtung 110 des Empfängers.

Der Empfänger umfaßt eine Einrichtung 110 zum Extrahieren der empfangenen Symbole und zum Zuordnen zu den einzelnen Teilkanälen, die im hier gezeigten OFDM-Fall eine Einrichtung ist, die eine diskrete Fouriertransformation durchführt. Daran anschließend folgt ein Kanalentzerrer, um sämtliche Teilkanäle, unabhängig von der bei der Übertragung aufgetretenen individuellen Signaldämpfung, auf den gleichen Pegel zu bringen. Dem Kanalentzerrer 112 ist dann eine erste Einrichtung zum Durchführen einer inversen Kombination 114a sowie eine zweite Einrichtung zum Durchführen einer inversen Kombination 114b nachgeschaltet, welche wiederum ausgangsseitig mit einem ersten Decodierer 115a und einem zweiten Decodierer 115b verbunden sind, die ausgangsseitig decodierte Informationssymbole liefern, die durch eine Einrichtung 116 zum Parallel/Seriell-Wandeln der decodierten Informationssymbole in einen seriellen Datenstrom umgewandelt werden, der dann einer Informationssenke 118 zugeführt werden kann.

Im Falle der Sicherung der Übertragung durch entweder Verfahren zur Vorwärts-Fehlerkorrektur (FEC: Forward Error Correction) oder durch Verfahren zur automatischen Wiederholung der Übertragung (ARQ: Automatic Request) oder eine Kombination derartiger Verfahren bietet es sich an, die entsprechenden Einrichtungen senderseitig zwischen den Einrichtungen 102 und 103a und 103b sowie empfangsseitig zwischen den Einrichtungen 115a und 115b und 116 anzuordnen.

Definitionsgemäß werden die Teilkanäle, die durch den ersten Codierer 103a jeweils codiert werden, als erster Satz von Teilkanälen bezeichnet. Bei dem in Fig. 1 gezeigten sehr schematischen Beispiel, bei dem lediglich sieben Teilkanäle vorhanden sind, bilden die ersten vier Teilkanäle von oben in Fig. 1 aus gezählt den ersten Satz von Teilkanälen mit den Nummern 1 bis 4. Die letzten drei Teilkanäle bilden den zweiten Satz von Teilkanälen, d. h. die Teilkanäle mit den Nummern 5, 6 und 7.

Die beiden Codierer 103a und 103b unterscheiden sich darin, daß die Informationsmenge, die sie jeweils einem codierten Informationssymbol zuordnen, unterschiedlich groß ist. Diese Zuordnung geschieht derart, daß, unabhängig von dem in diesem Satz von Teilkanälen verwendeten Modulationsverfahren, eine bestimmte Anzahl von Informationssymbolen der Einrichtung 102 zusammengefaßt werden und dem entsprechenden Teilkanal aus dem Satz von Teilkanälen ein entsprechender, (von der Quantelung des Signalraums durch das Modulationsverfahren abhängiger) i.a. komplexwertiger Signalwert am entsprechenden Ausgang zugeordnet wird, wobei die Anzahl der Ausgänge der Codiereinrichtung 103a der Anzahl der Teilkanäle im ersten Satz von Teilkanälen entspricht und sich von der Anzahl der zugeordneten Eingänge i.a. unterscheidet, wobei diese Unterscheidung für jeden Satz von Teilkanälen, entsprechend für jede Codiereinrichtung, individuell abhängig vom im Teilkanal gewählten Modulationsverfahren ist. Im Falle der bei einer Übertragung nach dem ADSL-Standard verwendeten QAM-Modulationsverfahren unterscheiden sich die beiden Codiereinrichtungen 103a und 103b darin, daß QAM-Verfahren mit unterschiedlicher Quantelung des Signalraumes verwendet werden, was in der Beschreibung des ADSL-Standards als unterschiedliche Bitloadingfaktoren bezeichnet wird, d.h. daß z.B. der Codierer 103a bei Verwendung eines $2^X$-QAM-Modulationsverfahrens im ersten Satz von Teilkanälen jeweils x Informationssymbole zusammen betrachtet und davon abhängig für das Ausgangssignal des zugeordneten Teilkanals einen von $2^x$ möglichen Signalpegeln generiert, während der Codierer 103b dann für den zweiten Satz von Teilkanälen jeweils (x-y) Informationssymbole zusammenfaßt und abhängig von diesen einen anderen von $2^{(x-y)}$ möglichen Signalpegeln am Ausgang des zugeordneten Teilkanals generiert.

Die beiden Kombinierer 104a, 104b führen eine Kombination der Teilkanäle in dem jeweiligen Satz von Teilkanälen durch. Mathematisch kann dieses Kombinieren für jede der Kombiniereinrichtungen 104a bzw. 104b beschrieben werden als Matrixmultiplikation eines Vektors t von jeweiligen Eingangssignalen mit einer Matrix P, welche als Ergebnis jeweils einen Vektor von Ausgangssignalen für den entsprechenden Satz von Teilkanälen liefert. Die Matrizen der verschiedenen Kombiniereinrichtungen können individuell verschieden oder gleich sein. Die genaue Wahl der Kombinationsvorschriften bzw. der jeweiligen Matrizen P der Kombiniereinrichtungen 104a und 104b müssen in Abstimmung mit den zugeordneten inversen Kombinationsvorschriften der Einrichtungen 114a und 114b des Empfängers vorgenommen werden wobei, wie noch gezeigt werden wird, orthogonale und normierte, d.h. orthonormierte bzw. im komplexen unitäre Matrizen Vorteile bieten. Durch dieses Kombinieren wird jede Information eines jeden Ausgangssignals der Codiereinrichtung 103a bzw. 103b einem jeden Ausgangssignal der jeweiligen Kombiniereinrichtung 104a bzw. 104b aufgeprägt, d.h. jede Information eines jeden Teilkanals des jeweiligen Satzes von Teilkanälen wird jedem Teilkanal des jeweiligen Satzes von Teilkanälen aufgeprägt, wobei die leistungsmäßige Aufteilung eines jeden codierten Symbols eines jeden Teilkanals auf die einzelnen Teilkanäle des Satzes von Teilkanälen i.a. gleichmäßig erfolgen sollte. Wenn im nachfolgenden immer nur von einer Kombinationsvorschrift gesprochen wird, so gelten diese Ausführungen für beide Kombinationsvorschriften bzw. im allgemeinsten Fall für jede der n vorhandenen Kombinationsvorschriften.

Das in Fig. 1 gezeigte Sende/Empfangs-Konzept wird nachfolgend auch als COFDM-Übertragungsstrecke (COFDM = Coded Orthogonal Frequency Division Multiplexing) bezeichnet, die für einen DSL-Kanal geeignet ist, die jedoch auch auf andere Kanäle anwendwar ist, die Teilkanäle haben, die sich hinsichtlich ihrer Übertragungscharakteristika unterscheiden.

Die Folge der Informationssymbole wird in einer Einrichtung 102 zum Gruppieren der Folge von Informationssymbolen pro Teilsatz in eine Gruppe von Informationssymbolen gruppiert und dann pro Teilsatz codiert, um pro Teilsatz einen Vektor t von codierten Informationssymbolen zu erhalten. Die Anzahl der Elemente bzw. codierten Informationssymbole dieses Vektors t entspricht der Anzahl der Teilkanäle des jeweiligen Satzes von Teilkanälen, bei einem COFDM-Verfahren der Anzahl der in diesem Teilsatz verwendeten Träger bzw. Trägerfrequenzen des Übertragungskanals.

Der Vektor t wird folgend pro Teilsatz in eine Einrichtung 104a oder 104b zum Kombinieren der codierten Informationssymbole des Vektors t gemäß einer Kombinationsvorschrift verarbeitet. Diese Einrichtungen 104a, 104b zum Kombinieren können beispielsweise die Abbildung des Vektors t auf je einen Vektor u über eine jeweilige Matrix P durchführen. Bei dieser Abbildung werden die einzelnen Elemente bzw. codierten Informationssymbole des Vektors t miteinander kombiniert, um eine Anzahl von kombinierten Informationssymbolen bzw. Elementen des Vektors u zu erzeugen, die gleich der Anzahl der Träger bzw. Teilkanäle in diesem Satz von Trägern bzw. Teilkanälen ist. Die Kombinationsvorschrift verteilt dabei die jeweiligen Informationen der einzelnen codierten Informationssymbole auf die kombinierten codierten Informationssymbole. Diese Verteilung kann beispielsweise durch die Abbildung des Vektors t mit einer orthogonalen und normierten bzw. orthonormalen Matrix P auf den Vektor u erfolgen.

Es sei darauf hingewiesen, daß die vorliegende Erfindung nicht darauf begrenzt ist, daß die Kombinationsmatrizen für die Sätze von Teilkanälen bzw. Trägern nicht exakt orthonormal sein müssen, sondern daß auch eine hinreichend große Orthonormalität ausreichend sein wird, obwohl das Rückgängigmachen der Kombination in einem Satz von Teilkanälen für möglichst orthonormale Matrizen die besten Ergebnisse liefern dürfte.

Die Matrix P kann dabei beispielsweise eine Hadarmard-Matrix oder eine PN-Matrix (PN = Pseudo-Noise = aus einer Zufallsfolge abgeleitete Matrix) oder eine andere hinreichend orthonormale, zur Matrix Q der zugeordneten Einrichtung (114a, 114b) inverse, Matrix sein.

Die kombinierten codierten Informationssymbole bzw. der Vektor der kombinierten codierten Informationssymbole u wird folgend in eine Einrichtung 106 zum Aufprägen der kombinierten codierten Informationssymbole, d. h. der Elemente des Vektors u, auf die entsprechenden Teilkanäle bzw. Träger der Sätze von Teilkanälen bzw. Trägern eingegeben, um ein moduliertes Signal zu erzeugen, das die Folge von Informationssymbolen darstellt. Dieses Signal wird durch einen Vektor v bezeichnet. Die Einrichtung 106 zum Aufprägen der Informationssymbole führt bei COFDM-Verfahren beispielsweise eine inverse diskrete Fourier-Transformation (IDFT) durch.

Das modulierte Signal v wird dann über einen Übertragungskanal 108 mit einem Frequenzgang a(f), z. B. einen DSL-Kanal oder einen anderen drahtgebundenen Kanal, wie z. B. eine Telephonanschlußleitung oder eine Energieversorgungsleitung, oder einen sonstigen Kanal mit Frequenzabhängigkeit der Übertragungsfunktion und/oder Frequenzabhängigkeit der Kanalstörgeräusche, wie z.B. einem Funkkanal, übertragen. Die vorliegende Erfindung ist jedoch nicht auf Kanäle begrenzt, bei denen sich die einzelnen Teilkanäle durch ihre Trägerfrequenzen unterscheiden. Die Erfindung ist generell für alle Übertragungskanäle geeignet, die Teilkanäle besitzen, die Teilkanäle mit unterschiedlicher Übertragungscharakteristika aufweisen.

Am Ende des Kanals wird ein durch den Kanal möglicherweise verzerrtes Signal empfangen, dem additiv verschiedene Störungen überlagert sind. Ein das Signal darstellender Vektor w wird folgend in eine Einrichtung 110 zum Extrahieren der kombinierten codierten Informationssymbole aus dem modulierten Signal bzw. dem Vektor w unter Verwendung der Mehrzahl von orthogonalen oder zumindest hinreichend orthogonalen Trägern eingegeben. Die Einrichtung 110 zum Extrahieren führt nun die inverse Handlung der Einrichtung 106 zum Aufprägen durch, d. h. beispielsweise beim COFDM-Verfahren eine diskrete Fourier-Transformation (DFT) oder eine andere zu der Handlung der Einrichtung 106 hinreichend inverse Transformation. Das Ergebnis des Extrahierens ist ein Vektor x, dessen Elemente die den einzelnen Teilkanälen, bei COFDM an einzelnen Trägern zugeordneten kombinierten codierten Informationssymbole sind.

Der Einrichtung zum Extrahieren ist bekannt, z.B. durch Festlegung beim Entwurf des Übertragungssystems oder durch Hilfsinformationen in dem empfangenen Kanal bzw. in einem separaten Hilfskanal, wie die Aufteilung des Übertragungskanal in die Sätze von Teilkanälen im Sender durchgeführt wurde. Sie liefert ausgangsseitig die Eingangssignale für die zumindest zwei inversen Kombinierer (114a, 114b), die dann wiederum die zumindest zwei Decodierer (115a, 115b) speisen, wie es in Fig. 1 gezeigt ist.

Bei einem nicht gestörten oder verzerrten Kanal ist der Vektor x gleich dem Vektor n. Die Elemente des Vektors x, d.h. die einzelnen Teilkanäle, bei COFDM z.B. gemäß der jeweiligen Zuordnung zu einem Träger des Übertragungskanals, werden jedoch durch eine frequenzabhängige Dämpfung des Kanals und durch additiv überlagerte Störungen unterschiedlich gestört und zusätzlich ist den einzelnen Komponenten des Vektors eine durch ein weisses Rauschstörgeräusch verursachte Störung überlagert. Durch die vorhergehende Kombination der Informationssymbole in der Einrichtung 104 zum Kombinieren sind die Informationssymbole der Gruppe von Informationssymbolen bzw. des Vektors t auf alle kombinierten Informationssymbole, z. B. die Elemente des Vektors u, beispielsweise gleichmäßig oder näherungsweise gleichmäßig verteilt. Obwohl die kombinierten codierten Informationssymbole abhängig vom Träger vom Kanal unterschiedlich gestört und verzerrt werden, können die ursprünglichen codierten Informationssymbole der Gruppe von Informationssymbolen durch die Kanalentzerrung im Block 112 derart entzerrt werden, daß das Ausgangssignal des Kanalentzerrers eine über der Frequenz konstante Leistungsdichte hat, was weiter hinten noch detaillierter ausgeführt wird.

Das demodulierte Signal bzw. der Vektor x der empfangenen kombinierten codierten Informationssymbole wird also in einen Kanalentzerrer 112 eingegeben, der beispielsweise den Frequenzgang a(f) des Kanals entzerrt. Nach dem Kanalentzerrer 112 wird das demodulierte entzerrte Signal bzw. der Vektor y je nach Teilsatz in eine Einrichtung 114a oder 114b zum Verarbeiten der kombinierten Informationssymbole eingegeben. Die Verarbeitungsvorschriften dieser Einrichtungen 114a, 114b zum Verarbeiten sind invers zu den Kombinationsvorschriften der Einrichtungen 104a, 104b zum Kombinieren, um die Kombinationen in den Teilsätzen rückgängig zu machen und um die codierten Informationssymbole der Folge von codierten Informationssymbolen aus den kombinierten codierten Informationssymbolen extrahieren zu können.

Die Verarbeitungsvorschrift der Einrichtung 114a, 114b ist eine Umkehrung oder näherungsweise Umkehrung der Kombinationsvorschrift der Einrichtung 114a, 114b, d.h. beispielsweise eine Matrixoperation mit einer orthonormalen oder hinreichend orthonormalen, zur Matrix P inversen oder näherungsweise inversen Matrix Q mit Q ungefähr $P^{-1}$, wie z. B. eine inverse Hadarmard-Matrix, eine inverse PN-Matrix oder eine andere hinreichend orthonormale Matrix. Man erhält schließlich wieder die Folge von codierten Informationssymbolen, die hier als Vektor z bezeichnet wird.

Wie aus Fig. 1 ersichtlich, werden die codierten Informationssymbole jedes Satzes nun in ihre entsprechenden Decodierer 115a, 115b eingespeist, die allgemein gesagt die Codierung der entsprechenden Codierer 103a, 103b wieder rückgängig machen, soweit dies aufgrund der überlagerten Störungen möglich ist.

Eine Einrichtung 116 zum Aufheben der Gruppierung wandelt die Gruppe von Informationssymbolen dann wieder in eine Folge von Informationssymbolen um, die ein Empfänger bzw. eine Senke 118 empfängt.

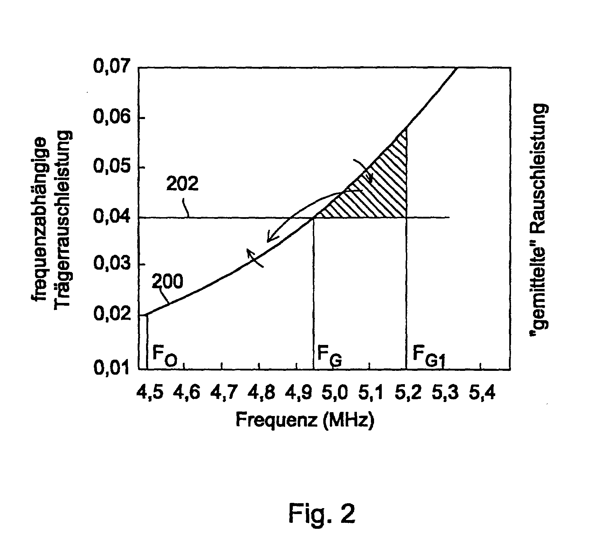

Im nachfolgenden wird auf Fig. 2 eingegangen, die einen Ausschnitt aus einem Übertragungskanal bzw. einen Übertragungskanal zeigt, der sich lediglich beispielhaft von 4,5 MHz bis 5,5 MHz erstreckt. Eine Kurve 200 zeigt die frequenzabhängige Trägerrauschleistung über der Frequenz, wie es sich nach der Entzerrung des frequenzabhängigen Dämpfungsverlaufs des Übertragungskanals durch die Einrichtung 112 ergibt. Im Falle des hier betrachteten Beispiels, bei dem die Sendeleistung über alle Träger konstant ist, bei dem der Übertragungskanal eine mit der Frequenz zunehmende Dämpfung hat, und bei einem über der Frequenz konstanten thermischen Rauschen ergibt sich die Kurve 200 nach einer Normierung des Übertragungskanals im Empfänger, derart, daß die Gesamtleistung über der Frequenz konstant ist. Anschaulich gesprochen wird das Sendesignal im Übertragungskanal mit steigender Frequenz immer mehr gedämpft. Die Kanalentzerrung führt dann dazu, daß die Signalleistung verstärkt wird und damit aber auch die Rauschleistung, wodurch sich trotz des über der Frequenz konstanten Rauschens des Empfängers eine mit der Frequenz zunehmende Trägerrauschleistung ergibt, was einem mit zunehmender Frequenz abfallenden Signal/Rausch-Verhältnis entspricht. Das erfindungsgemäße Konzept ist jedoch nicht nur auf einen Kanal beschränkt, der ein monoton fallendes Signal/Rausch-Verhältnis hat, sondern auf jeden beliebigen Kanal mit einer Verteilung der Übertragungsqualität über die Teilkanäle.

Die Grundidee der Erfindung wird nun genauer mittels Fig. 2 beschrieben. In dieser Figur ist die sich ergebende Rauschleistungsverteilung innerhalb eines bestimmten Frequenzbereichs für den Fall dargestellt, daß mittels des Kanalentzerrers 112 der Kanal 108 in Fig. 1 so entzerrt wird, daß sich für die Gesamtübertragungsfunktion ein konstanter Wert ergibt. Eine solche Entzerrung des Frequenzganges ist zwangsläufig mit einer Anhebung der spektralen Rauschleistung im oberen Frequenzbereich verbunden. Diese Anhebung der spektralen Rauschleistungsdichte ist in Fig. 2 dargestellt. Ebenfalls dargestellt ist die für ein bestimmtes Übertragungsverfahren zulässige spektrale Rauschleistungsdichte. Da diese lediglich vom gewählten Codierverfahren bzw. Modulationsverfahren und der zulässigen Übertragungsfehlerwahrscheinlichkeit abhängt, ergibt sich hierfür im Diagramm ein von der Frequenz unabhängiger konstanter Wert. Es sei darauf hingewiesen, daß die zulässige Übertragungsfehlerwahrscheinlichkeit einer vorbestimmte Zuverlässigkeit beim Decodieren der Informationssymbole entspricht.

Unterhalb einer bestimmten Frequenz $F_G$ ist die tatsächliche Rauschleistungsdichte geringer als zulässig.

Hieraus resultiert eine höhere als die erforderliche Zuverlässigkeit der in diesem Frequenzbereich mittels $2^x$-QAM oder eines anderen Codierverfahrens übertragenen codierten Informationssymbole.

Es kann jedoch bei Verfahren nach dem Stand der Technik nicht zu einem höherstufigen $2^{x+1}$-QAM-Codierverfahren, das heißt zu einem Codierverfahren, das einem codierten Informationssymbole mehr Informationen zuweist und somit eine feiner Quantelung des Signalraums aufweist, übergegangen werden, da hierfür ein Rückgang der Rauschleistungsdichte im Falle der QAM-Codierung um den Faktor 2 erforderlich ist. Dies ist erst unterhalb der Frequenz $F_0$ gegeben. Oberhalb der Frequenz $F_G$ kann bei Verfahren nach dem Stand der Technik ein $2^x$-stufiges Codierverfahren nicht mehr angewendet werden, da wegen der höher als zulässigen spektralen Rauschleistungsdichte die codierten Informationssymbole nicht mit der geforderten Sicherheit übertragen werden können. In diesem Frequenzbereich muß bei Verfahren nach dem Stand der Technik ein $2^{x-1}$-QAM-Codierverfahren verwendet werden.

Erfindungsgemäß wird nun durch zusätzliche Orthogonaltransformationen mittels einer der orthonormierten (orthogonal und normiert) Matrix P und Q, siehe Fig. 1 Einrichtungen 104a und 104b sowie 114a und 114b, eine Vergleichmäßigung des Verlaufs der spektralen Rauschleistungsdichte über die Frequenz herbeigeführt. Dies wird erreicht, indem für Teilkanäle oberhalb von $F_0$ und unterhalb von $F_G$ ein Anstieg der Rauschleistungsdichte bis zum für ein $2^x$-QAM-Codierverfahren maximal zulässigen Wert zugelassen wird, andererseits aber oberhalb $F_G$ die Rauschleistungsdichte bis zu einer Frequenz $F_{G1}$ auf den maximal zulässigen Wert gesenkt werden kann. Hierbei wird jede zu übertragende Information durch Transformation eines Informationsvektors mittels der Matrix Q allen codierten kombinierten Informationssymbolen, d.h. allen Teilkanälen innerhalb des betrachteten Satzes von Teilkanälen durch die Einrichtungen 104a und 104b aufgeprägt. Der Satz von Teilkanälen, der in Fig. 2 betrachtet wird, erstreckt sich somit bei dem Verfahren gemäß der Erfindung von einem Träger mit der Frequenz $F_0$ bis zu einem Träger mit der Frequenz $F_{G1}$ im Gegensatz zu Verfahren nach dem Stand der Technik, welche nur den Bereich bis zur Frequenz FG nutzen. Es sei darauf hingewiesen, daß beim Stand der Technik die Teilkanäle zwischen $F_G$ und $F_{G1}$ mit einem niederstufigen Codierverfahren codiert werden mußten, während diese Träger aufgrund des erfindungsgemäßen Konzepts nun mit dem gleichen Codierverfahren wie die Träger im Bereich von $F_0$ bis $F_G$ codiert werden können, wodurch sich ein Gewinn an verfügbarer Übertragungsrate ergibt. Der durch die Erfindung bewirkte Nettogewinn an verfügbarer Übertragungsrate entspricht der Differenz zwischen der Menge an Informationen, die durch die beiden Codierverfahren zugeordnet werden, multipliziert mit der Anzahl von Trägern, d. h. Teilkanälen, im Bereich von $F_G$ zu $F_{G1}$.

Im Empfänger ist dann eine entsprechende Rücktransformation erforderlich. Bei dieser Rücktransformation erfolgt gleichzeitig eine gewichtete Addition der Störamplituden der einzelnen Modulationssymbole. Besitzt die Rücktransformationsmatrix, z. B. die Matrix Q in Fig. 1, die Eigenschaft, daß sämtliche Elemente einer jeden Zeile den Betrag 1 besitzen, d.h. ist die Matrix Q orthonormal oder unitär, so bewirkt die gewichtete Addition der Rauschstörbeiträge eine Mittelung. Hierdurch wird es möglich, ein bestimmtes $2^x$-Codierverfahren über die Frequenz $F_G$ hinaus auch für Träger bis zu der Frequenz $F_{G1}$ für die Übertragung zu verwenden. Die Differenz aus der Rateneffizienz des $2^x$-Modulationsverfahrens zur Rateneffizienz des sonst im Frequenzbereich $F_G$ .. $F_{G1}$ zur Anwendung kommenden $2^{x-1}$-QAM-Modulationsverfahrens multipliziert mit der Bandbreite $F_{G1}$- $F_G$ ergibt also, wie es angemerkt wurde, den durch die Erfindung erzielbaren Ratengewinn.

Die Vergleichmäßigung der überlagerten Rauschleistung durch eine Orthonormaltransformation wird nun näher erläutert. Es sei darauf hingewiesen, daß sich die nachfolgend gegebene Herleitung auf jeden Satz von Teilkanälen bzw. Trägern einzeln bezieht, und daß keine Vergleichmäßigung über Satzgrenzen hinweg durchgeführt wird.

Das als Vektor t mit komplexen Komponenten vorliegende Sendesignal wird mittels einer orthonormalen Matrix P in den Vektor u transformiert.

$$\underline{u} = P\underline{t} \tag{1}$$

Durch diese Transformation gemäß Gleichung 1 und die Orthonormalitätseigenschaften von Matrizen (vgl. Gleichung 3) wird jede Komponente des Vektors t gleichmäßig auf alle Komponenten des Vektors u abgebildet, d. h. jedes einzelne Bit Information einer Komponente t(i) wird allen Komponenten des Vektors u aufgeprägt und damit letztlich in allen Teilkanälen bzw. auf allen Trägerfrequenzen eines Satzes übertragen.

Kennzeichnend für orthonormale oder unitäre Matrizen, wie die Matrix P, ist die mathematische Eigenschaft, daß bei einer Transformation des Vektors t die in demselben enthaltene Leistung unabhängig von der Art ihrer Verteilung auf die einzelnen Komponenten erhalten bleibt.

Es gilt folglich für jede Komponente von u, wobei p(u[j]) die Leistung der j-ten Komponente des Vektors u angibt:

$$p(u[j]) = u[j]u[j]^* = \frac{1}{N}\sum_{i=0}^{N-1} t[i]t[i]^* \qquad (2)$$

Dies kann z. B. für Matrizen mit reellen Koeffizienten erreicht werden durch die Forderung

$$|p_{ij}| = 1 \qquad \forall i,j \qquad (3)$$

Matrizen, welche diese Forderung erfüllen, sind z. B. Hadarmard-Matrizen und PN-Matrizen.
Die Hadarmard-Matrix $H_2$ vom Rang 2 ist wie folgt definiert:

$$H_2 = \frac{1}{\sqrt{2}}\begin{bmatrix} 1 & 1 \\ 1 & -1 \end{bmatrix} \qquad (4)$$

Hadarmard-Matrizen vom Rang $2^{n+1}$ können hierauf aufbauend mit folgender Rekursionsformel gebildet werden:

$$H_{2^n} = \frac{1}{\sqrt{2}}\begin{bmatrix} H_{2^n} & H_{2^n} \\ H_{2^n} & -H_{2^n} \end{bmatrix} \qquad (5)$$

PN-Matrizen (PN = Pseudo Noise = Pseudo-Zufallsrauschen) werden aus einem $2^{n-1}$ Symbole langen Ausschnitt einer (binären) PN-Sequenz gebildet. Die erste Zeile (oder auch die erste Spalte) der Matrix entspricht dabei dem $2^{n-1}$ langen Ausschnitt aus der Sequenz, die weiteren Zeilen ergeben sich durch zyklische Verschiebung der jeweils vorangegangenen Zeile (bzw. Spalte). Durch die zyklische Verschiebung ergibt sich überdies eine zyklische Matrix, was für die praktische Implementierung Vorteile bringt. Für eine Sequenz der Länge N = 7 ist z. B. die Folge eine pseudozufällige Folge.

$$a(v=(1,1,-1,-1,1,-1,1) \qquad (6)$$

Hieraus ergibt sich die folgende PN-Matrix vom Rang 7:

$$A = \begin{bmatrix}
1 & 1 & -1 & -1 & 1 & -1 & 1 \\
1 & 1 & 1 & -1 & -1 & 1 & -1 \\
-1 & 1 & 1 & 1 & -1 & -1 & 1 \\
1 & -1 & 1 & 1 & 1 & -1 & -1 \\
-1 & 1 & -1 & 1 & 1 & 1 & -1 \\
-1 & -1 & 1 & -1 & 1 & 1 & 1 \\
1 & -1 & -1 & 1 & -1 & 1 & 1
\end{bmatrix} \qquad (7)$$

Abhängig davon, welche orthonormale Matrix P, siehe Fig. 1, im Sender zur Transformation verwendet wurde, muß im Empfänger die entsprechende inverse Matrix $Q = P^{-1}$ verwendet werden. Diese inversen Matrizen sind im allgemeinen ebenfalls orthonormierte Matrizen.
Für Hadarmard-Matrizen ergibt sich z. B., daß deren zugehörige Inverse die Hadarmard-Matrix selbst ist.

$$P = H_{2^n} \Rightarrow Q = P^{-1} = H_{2^n}^{-1} = H_{2^n}. \tag{8}$$

Für zyklische PN-Matrizen ergeben sich als Inverse wieder zyklische PN-Matrizen.

$$Q = P^{-1} = \begin{bmatrix} b_0 & b_6 & b_5 & b_4 & b_3 & b_2 & b_1 \\ b_1 & b_0 & b_6 & b_5 & b_4 & b_3 & b_2 \\ b_2 & b_1 & b_0 & b_6 & b_5 & b_4 & b_3 \\ b_3 & b_2 & b_1 & b_0 & b_6 & b_5 & b_4 \\ b_4 & b_3 & b_2 & b_1 & b_0 & b_6 & b_5 \\ b_5 & b_4 & b_3 & b_2 & b_1 & b_0 & b_6 \\ b_6 & b_5 & b_4 & b_3 & b_2 & b_1 & b_0 \end{bmatrix} = \begin{bmatrix} a_0 & a_6 & a_5 & a_4 & a_3 & a_2 & a_1 \\ a_1 & a_0 & a_6 & a_5 & a_4 & a_3 & a_2 \\ a_2 & a_1 & a_0 & a_6 & a_5 & a_4 & a_3 \\ a_3 & a_2 & a_1 & a_0 & a_6 & a_5 & a_4 \\ a_4 & a_3 & a_2 & a_1 & a_0 & a_6 & a_5 \\ a_5 & a_4 & a_3 & a_2 & a_1 & a_0 & a_6 \\ a_6 & a_5 & a_4 & a_3 & a_2 & a_1 & a_0 \end{bmatrix}^{-1} \tag{9}$$

Vorteilhaft für die Erfindung ist es, wenn die Matrix $Q = P^{-1}$ im Empfänger möglichst gute Orthonormalitätseigenschaften aufweist, d.h., daß unabhängig von der Leistungsverteilung der Komponenten in y gilt, wobei $p(z[j])$ für die Leistung der Komponente j steht:

$$p(z[j]) = z[j]z[j]^{\bullet} = \frac{1}{N} \sum_{i=0}^{N-1} y[i]y[i]^{\bullet} \tag{10}$$

Dies kann, entsprechend wie bei der Matrix P im Sender, erreicht werden durch die Forderung:

$$|q_{ij}| = 1 \qquad \forall i,j \tag{11}$$

Im allgemeinen ist die Inverse einer orthonormierten Matrix wieder eine orthonormierte Matrix. In diesem Fall kann eine der beiden Matrizen frei gewählt werden, die andere Matrix ergibt sich dann entsprechend. Bei Verwendung von nur näherungsweise orthonormierten Matrizen kann aber eine bestimmte Zuordnung der Matrizen zu P und Q Vorteile bringen.

Die Erfüllung oder näherungsweise Erfüllung der Forderung nach Orthonormalität der Matrix Q ermöglicht die im folgenden beschriebene Vergleichmäßigung der spektralen Rauschleistungsdichte bzw. Störleistungsdichte innerhalb eines Satzes von Teilkanälen. Die nachfolgenden Anmerkungen gelten also für jeden Satz von Teilkanälen, der einer Kombination mittels einer Kombinationsvorschrift unterzogen worden ist.

Unterstellt man, daß unter praktischen Randbedingungen gegeben ist, daß die Rauschstörgeräusche der einzelnen Kanäle untereinander unkorreliert sind, so ergibt sich für das resultierende Rauschstörgeräusch in der k-ten Komponente des Ausgangsvektors z:

$$z_{Stör} = Q y_{Stör} \tag{12}$$

und

$$|q_{ij}| = 1 \qquad \forall i,j \tag{13}$$

$$z_j = \frac{1}{\sqrt{N}} \sum_{i=0}^{N-1} q_{ij} y_i \tag{14}$$

Es ergibt sich für die Störleistung der j-ten Komponente des Vektors z:

$$p(z[j]) = z[j]z[j]^{\bullet} = \frac{1}{N}\sum_{i=0}^{N-1} y[i]y[i]^{\bullet} \qquad (15)$$

Da der Index i in Gl. 15 frei wählbar ist, ergibt sich aus Gl. 15 unmittelbar, daß die Störleistungen aller Komponenten von z gleich sind. Es gilt also:

$$p(\underline{z}(i)) = \frac{1}{N}p(\underline{y}) = \frac{1}{N}\sum_{i=0}^{N-1} \underline{y}^2(i) \qquad (16)$$

Diese Vergleichmäßigung der Rauschleistung in den betrachteten Teilkanälen ist ein mathematische Eigenschaft orthonormierter Matrizen.

Die am Beispiel eines isolierten Teilkanals in Fig. 2 geschilderte Vergleichmäßigung ermöglicht insgesamt eine frequenzmäßig nach oben verschobene Aufteilung der einzelnen Teilkanäle.

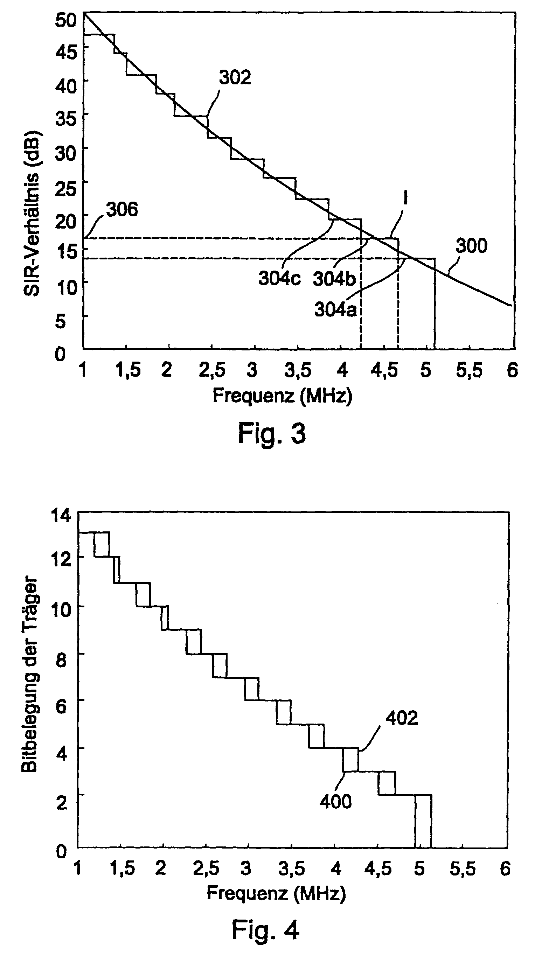

Fig. 3 zeigt das frequenzabhängige S/R-Verhältnis, das die obere Frequenzgrenze der Teilkanäle bei herkömmlichen OFDM-Verfahren bestimmt, und das die nutzbare Trägerbelegung beim erfindungsgemäßen Konzept bzw. den Verlauf des maximal möglichen Bitloadingfaktors über der Frequenz bei dem erfindungsgemäßen bevorzugten Ausführungsbeispiel festlegt. Aus Fig. 3 ist erkennbar, wie sich die oberen Frequenzgrenzen der einzelnen Sätze von Teilkanälen über die monoton fallende Kurve für das S/R-Verhältnis hinaus verschoben haben. Diese Kurve bestimmt bei herkömmlichen Verfahren (Fig. 8) die obere Frequenzgrenze der Teilkanäle.

In Fig. 3 ist eine Aufteilung eines Übertragungskanals in 12 Sätze von Teilkanälen dargestellt, von denen lediglich die ersten drei mit 304a bis 304c bezeichnet sind. Insbesondere umfaßt der Satz von Teilkanälen, der in Fig. 3 mit 304b bezeichnet ist, Teilkanäle mit Trägerfrequenzen von etwa 4,3 bis 4,75 MHz. Es sei angenommen, daß für den Satz von Teilkanälen, der die Teilkanäle mit den höchsten Trägerfrequenzen umfaßt, in Fig. 3 der mit 304a bezeichnet, ein $2^2$-QAM-Verfahren zum Einsatz kommt. Außerdem sei angenommen, daß bei dem Satz 304b von Teilkanälen ein $2^3$-QAM-Modulationsverfahren zum Einsatz kommen. Aufgrund des Signal/Rausch-Verhältnisses über der Frequenz für den Kanal 300 ergibt sich für das für den Satz 304b von Teilkanälen verwendete Codierverfahren ein Grenz-Signal/Rausch-Verhältnis 306 von etwa 17 dB. Die Träger in dem Satz 304b von Teilkanälen müssen somit mindestens ein Signal/Rausch-Verhältnis gleich dem Grenz-Signal/Rausch-Verhältnis haben, damit eine vorbestimmte Zuverlässigkeit beim Decodieren der Informationssymbole möglich wird. Analog dazu lautet das Grenz-Signal/Rausch-Verhältnis für den Satz 304a von Teilkanälen etwa 14 dB. Somit ergibt sich für jeden Satz von Teilkanälen, d. h. für jedes verwendete Codierverfahren, ein eigenes Grenz-Signal/Rausch-Verhältnis. Wie es aus Fig. 8 ersichtlich ist, war die Trägerbelegung gemäß dem Stand der Technik dahingehend begrenzt, daß der Träger mit der höchsten Frequenz in einem Satz von Trägern ein Signal/Rausch-Verhältnis hatte, das größer oder gleich dem Grenz-Signal/Rausch-Verhältnis war.

Dagegen enthalten die Sätze von Teilkanälen gemäß der vorliegenden Erfindung nun zumindest einen Teilkanal, dessen Signal/Rausch-Verhältnis ohne Kombinieren kleiner als das Grenz-Signal/Rausch-Verhältnis ist, und das aufgrund des Kombinierens größer als dieses oder mindestens gleich diesem Grenz-Signal/Rausch-Verhältnis ist. Dies hat günstigerweise zur Folge, daß dieser Teilkanal im Vergleich zum Stand der TEchnik mit dem nächsthöheren Codierverfahren codiert werden kann.

Dieser zumindest eine Teilkanal bildet somit einen Bereich I, der sich über die Kurve 300 hinaus erstreckt. Wenn dieser Teilkanal mit dem in Fig. 8 gezeigten Fall ohne Kombinieren verglichen wird, so ist also zu sehen, daß ein Teilkanal im Bereich I des Satzes 304b ein erhöhtes Signal/Rausch-Verhältnis hat, das durch das Kombinieren im Teilkanal bewirkt wurde, was dazu führt, daß dieser Teilkanal bei dem in Fig. 3 gezeigten Beispiel nicht mit dem niederststufigen Codierverfahren sondern bereits mit einem um 1 höherstufigen Codierverfahren codiert werden kann, wodurch die Datenrate des Systems im Vergleich zum Stand der Technik angestiegen ist, wie es bereits ausgeführt worden ist.

Fig. 4 zeigt einen Vergleich der Trägerbelegung beim herkömmlichen DMT-Verfahren und beim COFDM-Verfahren gemäß der vorliegenden Erfindung. In Fig. 4 ist die sich ergebende Verteilung der Bitloadingfaktoren über der Frequenz für das herkömmliche und das neuartige Verfahren dargestellt. Der Ratengewinn ist aus dieser Figur direkt ablesbar, derselbe entspricht der von beiden Kurven umschlossenen Fläche längs des Treppenverlaufs. Die umschlossene Fläche entspricht der mit herkömmlichen Verfahren nicht direkt nutzbaren Kanalkapazität.

Der so erzielbare Gewinn an Übertragungsrate kann sowohl zur Erhöhung der übertragbaren Nutzinformationsrate als auch bei der Verwendung von Fehlersicherungsverfahren wie FEC oder ARQ (ARQ = Automatic Repeat Request = Automatische Anforderung einer Wiederholung bei einem Übertragungsfehler) zur Erhöhung der Zuverlässigkeit der Übertragung verwendet werden. Auch eine Kombination beider Ziele, d. h. eine erhöhte Informationsrate verbunden mit einer Redundanz-Codierung, kann bei bestimmten Anwendungsfällen sinnvoll sein. Bei FEC-Verfahren erfolgt eine Fehlerkorrektur mittels einer zusätzlichen, zusammen mit der Information übertragenen Redundanz. Unter praktisch sinnvollen Randbedingungen (S/R) genügt ein Teil der gewonnenen zusätzlichen Übertragungsrate, um den durch die Vergleichmäßigung des Frequenzbereichs entstandenen Zuverlässigkeitsverlust der Modulationssymbole im Frequenzbereich $F_0$ bis $F_G$ durch einen FEC auszugleichen. Es sei angemerkt, daß das S/R-Verhältnis dieser Träger ohnehin nur bis zur Zulässigkeitsgrenze, jedoch nicht darunter, abgesenkt wurde. Der für die FEC nicht benötigte Teil des Ratengewinns steht als Nettoratengewinn zur Verfügung.

Dies sei anhand von Fig. 2 erläutert. In Fig. 2 ist das sich am Empfängereingang ergebende S/R-Verhältnis in Abhängigkeit von der Frequenz dargestellt. Teilt man den zur Verfügung stehenden Frequenzbereich im Bereich $F_0...F_1$ in N Sätze von Teilkanälen auf, so ergibt sich für jeden dieser N Sätze von Teilkanälen ein individuelles S/R-Verhältnis. Die Rauschleistungsdichte innerhalb dieser Sätze von Teilkanälen kann dabei als konstant angenommen werden. Innerhalb eines Satzes von Teilkanälen können einer oder mehrere Träger mit den ihnen aufgeprägten codierten kombinierten Informationssymbolen übertragen werden, wobei von einer binären Übertragung (Bitloadingfaktor 1) ausgegangen wird, und die Modulationssymbole mit einer gewissen Zuverlässigkeit $p \leq p_{max}$ übertragen werden sollen. Es wird nur der Frequenzbereich f größer oder gleich $F_0$ betrachtet.

Bei Verwendung herkömmlicher Verfahren wird im Entscheider des Empfängers jedes einzelne Symbol, im Fall von DMT also jeder einzelne Träger, isoliert für sich betrachtet. Dies bedingt, daß jeder Teilkanal bzw. einzelne Träger ein bestimmtes S/R aufweisen muß, wenn die Bitfehlerwahrscheinlichkeit der Übertragung $p \leq p_{max}$ bleiben soll. Die höhere Zuverlässigkeit der unterhalb von $F_G$ übertragenen Symbole wird beim herkömmlichen Verfahren, das in Fig. 8 skizziert ist, nicht genutzt.

Durch die Vergleichmäßigung gemäß der Erfindung kann aber der Frequenzbereich bis zu der Frequenz $F_{G1}$ genutzt werden. Bei Nutzung des Frequenzbereichs bis $F_{G1}$ können dann mehr als K Symbole mit der geforderten Mindestzuverlässigkeit $p \leq p_{min}$ übertragen werden.

Sollte nun eine bestimmte Anwendung bei herkömmlichen DMT-Verfahren von der höheren Zuverlässigkeit der unterhalb von $F_G$ übertragenen Symbole Gebrauch machen, so kann bei dem Verfahren gemäß der Erfindung diese höhere Zuverlässigkeit durch Anwendung eines FEC-Verfahrens erreicht werden, indem die im Frequenzbereich zwischen $F_G$ und $F_{G1}$ übertragenen Informationen oder Teile davon als (zusätzliche) Redundanz verwendet werden.

Aus Fig. 8, Fig. 3 und insbesondere Fig. 4 ist deutlich erkennbar, daß das Verfahren in der bisher geschilderten Form der Vergleichmäßigung zur Erhöhung des nutzbaren Frequenzbereichs bzw. zur Erhöhung der nutzbaren Informationsrate noch nicht zu einer Verringerung der Bitloadingfaktoren führt.

Gemäß einem weiteren Ausführungsbeispiel der vorliegenden Erfindung wird eine solche Verringerung bevorzugt, da die hohen Bitloading-Faktoren in den unteren Teilkanälen maßgeblich den Implementierungsaufwand für die erforderlichen D/Aund A/D- Wandlungen und die Arithmetik bestimmen. Eine Verringerung der Bitloadingfaktoren wird möglich, wenn sich die Vergleichmäßigung über einen größeren Frequenzbereich oder im Grenzfall über den Gesamtkanal erstreckt, wobei sich der Grenzfall dadurch auszeichnet, daß nur noch zwei Sätze von Teilkanälen, zwei Kombinierer und zwei Codierer vorhanden sind.

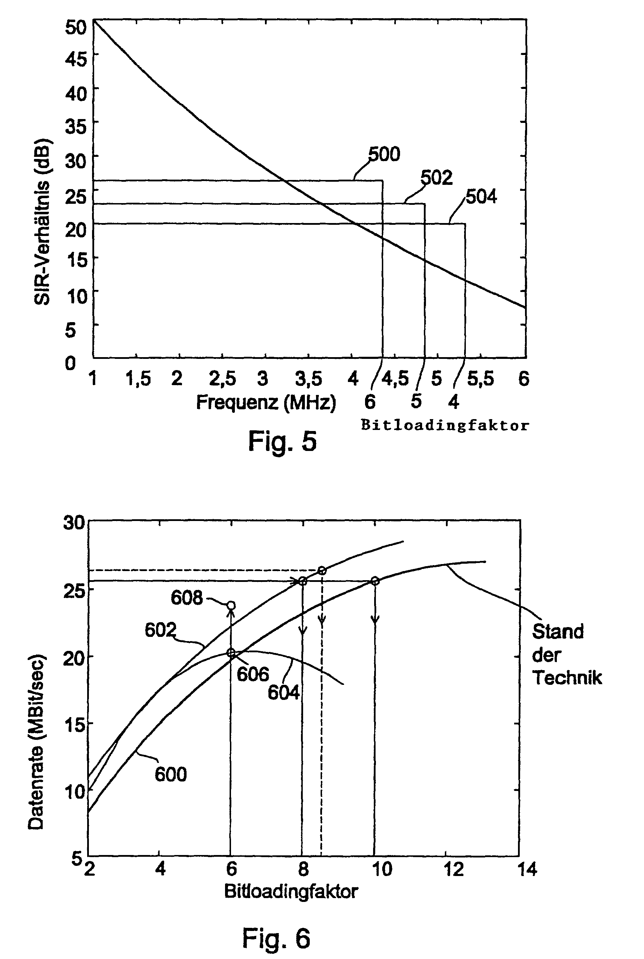

In Fig. 6 ist der Zusammenhang zwischen den erzielbaren Datenraten (Ordinate) und den vorgebbaren maximalen Bitloadingfaktoren (Abszisse) für die beiden Strategien "Vergleichmäßigung über mehrere Teilbänder" und "Vergleichmäßigung über den Gesamtkanal" dargestellt. Fig. 6 zeigt zwei von links unten nach rechts oben monoton ansteigende und eine parabelförmig verlaufende Kurve. Die untere monoton ansteigende Kurve zeigt die mit dem herkömmlichen Verfahren von Fig. 8, die obere monoton ansteigende Kurve die mit dem neuartigen Verfahren von Fig. 3 erzielbaren Übertragungsraten bei Beschränkung der Bitloadingfaktoren auf einen vorgegebenen maximalen Wert. Die parabelförmige Kurve zeigt die sich ergebenden Übertragungsraten bei Vergleichmäßigung des gesamten Übertragungskanals, siehe auch Fig. 5, die eine alternative Trägerbelegung beim COFDM-Verfahren zeigt.

Die in Fig. 6 mit 606 bezeichnete Stelle bezieht sich auf den Fall, in dem der erste Satz von Teilkanälen einen Bitloadingfaktor von 6 hat, so daß sich eine Datenrate von knapp 20 MBit/sec ergibt. Die Bandbreite der verwendeten Träger im ersten Satz von Teilkanälen reicht von 1 MHz bis zu etwa 4,3 MHz, wie es in Fig. 5 unten angemerkt ist. Dies entspricht der Kurve 500 in Fig. 5. Es sei darauf hingewiesen, daß im Übertragungskanal immer noch ein Frequenzband verbleibt, das von 4,3 bis 5,3 MHz reicht, das mit einem Bitloadingfaktor von 6 - trotz des Kombinierens - nicht mehr belegt werden kann. Erfindungsgemäß wird daher ein zweiter Satz von Teilkanälen eingesetzt, der nun oberhalb der Trägerfrequenz 4,3 MHz positioniert ist, wobei der zweite Satz von Teilkanälen bis etwa 5,3 MHz reicht, wenn das zweite Codierverfahren einen Bitloadingfaktor von 3 hat. Der zweite Satz ist jedoch aus Übersichtlichkeitsgründen in der Figur nicht eingezeichnet. Der mit dem Bezugszeichen 608 in Fig. 6 bezeichnete Punkt berücksichtigt den Beitrag des zweiten Satzes von Teilkanälen zur Datenrate. Es ist also durch einen Vergleich der Punkte 608 und 606 zu sehen, daß durch das erfindungsgemäße Verfahren der Verwendung von zumindest zwei Sätzen von Teilkanälen, die unterschiedlich codiert und kombiniert werden, ein deutlicher Datenratengewinn erreichbar ist gegenüber dem Fall, in dem der gesamte Übertragungskanal vergleichmäßigt wird. Es sei darauf hingewiesen, daß das Kombinieren des gesamten Übertragungskanals und das Verwenden nur eines einzigen Codierverfahrens zu einer unerwünschten Einschränkung der nutzbaren Bandbreite führt, was aus Fig. 5 ersichtlich ist.

Gibt man als Entwurfskriterium für ein Übertragungssystem eine bestimmte Übertragungsrate vor, so erkennt man aus Fig. 6, daß das neue System im Bereich hoher Übertragungsraten eine signifikante Reduzierung des erforderlichen maximalen Bitloadingfaktors ermöglicht. Für den Fall gleicher Bruttoübertragungsraten in den beiden Systemen (gleiche Nettodatenraten und gleiche Redundanz für den FEC) ergibt sich dies anschaulich durch eine waagrechte Gerade mit dem Ordinatenwert der vorgegebenen Datenrate. Die Abszissenwerte der Schnittpunkte beider Systemkurven mit der Geraden ergeben die erforderlichen Bitloadingfaktoren, wobei unmittelbar ersichtlich ist, daß das neue System grundsätzlich geringere Bitloadingfaktoren benötigt. Die Differenz der Bitloadingfaktoren wird mit zunehmender Datenrate immer signifikanter.

Für den Fall gleicher vorgegebener Bitloadingfaktoren in beiden Systemen ergeben sich für das Ausführungsbeispiel der vorliegenden Erfindung, das möglichst niedrige Bitloadingfaktoren anstrebt, immer höhere Bruttoübertragungsraten. Dies ist zu erkennen, wenn in Fig. 6 von der Abszissenachse aus von einem bestimmten Bitloadingfaktor (z. B. 5) nach oben gegangen wird. Man trifft dann auf die Ratenkurven für das herkömmliche (Kurve 600) und das erfindungsgemäße Konzept (Kurve 602). Die Raten für das neuartige System liegen dabei, mit Ausnahme des rechten oberen Bereichs im Diagramm, immer deutlich über den Rate herkömmlicher Verfahren. Selbst nach Abzug einer zusätzlichen FEC-Redundanz in der Größenordnung von 1 % bis 3 % für das erfindungsgemäße System mit FEC-Redundanz verbleibt immer noch ein deutlicher Nettoratengewinn.

Es wäre hier ebenfalls denkbar, den gesamten Frequenzbereich oder nur $F_{G1}$ nach unten zu verschieben, oder die Bandbreite der einzelnen Sätze von Teilkanälen zu verkleinern, bis sich dieselben Nettoübertragungsraten ergeben. Aus der im unteren Frequenzbereich geringeren Kabeldämpfung resultiert dann eine größere überbrückbare Entfernung.

Es sei schließlich bemerkt, daß sich lediglich im Bereich sehr großer Datenraten, in Fig. 6 rechts oben, bei gleichen Bitloadingfaktoren nur geringfügige Unterschiede in den erreichbaren Bruttoübertragungsraten ergeben. Diese geringe Differenz resultiert aus der Tatsache, daß auch das neue Verfahren die vorhandene Kanalkapazität nur zu einem bestimmten Teil, wenn auch besser als das herkömmliche Verfahren (Fig. 8) ausnutzt.

Die parabelförmige Kurve in Fig. 6 beschreibt den Fall der Vergleichmäßigung des gesamten Übertragungskanals. Das Maximum und das Abknicken der Kurve bei höheren Bitloadingfaktoren ergibt sich aus der ausgeprägten TP-Charakteristik des (Kabel-)Übertragungskanals. Dies sei nachfolgend erläutert. Die Idee des Ratengewinns durch Vergleichmäßigung beruht auf dem Umstand, daß das S/R-Verhältnis nicht im gesamten Frequenzbereich gleich ist ($S/N = S(f)/N(f)$), und insbesondere im unteren Frequenzbereich meist sehr viel höher als für die Anwendung eines bestimmten Bitloadingfaktors erforderlich ist. Hierdurch wird es möglich, den nutzbaren Frequenzbereich, d. h. den Frequenzbereich in dem $S(f)/R(f) \geq S/R_{min} = f(p_{max})$ ist, zu erweitern. Als Ergebnis ergibt sich ein über dem gesamten gemittelten Bereich konstantes $S/R = S/R_{min}$. Es sei angemerkt, daß in sämtlichen Gleichungen S = Signal dem Ausdruck C = Carrier entspricht, und daß auch R = Rauschen dem Ausdruck N = Noise entspricht:

$$\overline{\left[\frac{c}{N}\right]} = \frac{\overline{C}}{\overline{N}} \qquad\qquad (17)$$

$$= \frac{\frac{1}{F_2-F_1}\int_{F_1}^{F_2} C(f)}{\frac{1}{F_2-F_1}\int_{F_1}^{F_2} N(f)}$$

Bezieht man in diese Mittelung Frequenzbereiche ein in denen ein überproportionaler Anteil von (Rausch-) Störungen auftritt, so bedeutet dies, daß sich bei der Mitteilung durch eine Orthogonaltransformation das resultierende S/R-Verhältnis im Gesamten verschlechtert. Dies erzwingt eine Reduzierung des Bitloadingfaktors, so daß sich Netto trotz der belegten gestörten Teilkanäle eine niedrigere Übertragungsrate ergibt. Hieraus ergibt sich, daß es sinnvoll ist, derartige übermäßig gestörte Teilkanäle entweder keinem Satz von Teilkanälen zuzuordnen oder sie einem Satz von Teilkanälen zuzuordnen, der ein entsprechend niederstufiges Codierverfahren verwendet. Bildet man bei der Definition der Sätze von Teilkanälen den Bitloadingfaktor zu klein, so ergibt sich zwar eine größere nutzbare Bandbreite, bzw. eine entsprechend große Anzahl von nutzbaren Teilkanälen für diesen Satz von Teilkanälen, insgesamt resultiert aber eine geringere nutzbare Datenrate, diese ist proportional dem Produkt der Anzahl der Teilkanäle des Satzes und dem verwendeten Bitloadingfaktor, für diesen Satz von Teilkanälen. Dies entspricht dem linken abfallenden Teil der Kurve 604 in Fig. 6. Wählt man bei der Definition der Sätze von Teilkanälen den Bitloadingfaktor dagegen zu groß, so ergibt sich nur eine kleine nutzbare Bandbreite bzw. eine kleine Anzahl von Teilkanälen des Satzes von Teilkanälen, woraus wiederum nur eine geringe nutzbare Datenrate für diesen Satz von Teilkanälen resultiert. Dies entspricht dem rechten abfallenden Teil der Kurve 604 in FIg. 6. Abhängig von der Übertragungsqualität der einzelnen Teilkanäle ergibt sich für einen ersten Satz von Teilkanälen ein optimaler Bitloadingfaktor und eine bestimmte Anzahl von bestimmten Teilkanälen, welche diesem ersten Satz von Teilkanälen zugeordnet wird, bei dem die Übertragungsrate von diesem Satz von Teilkanälen maximal wird. Im Beispiel ergibt sich aus FIg. 6 ein optimaler Bitloadingfaktor von 6 und einer resultierenden Übertragungsrate von ca. 20 Mbit/sec., zu entnehmen dem Scheitelpunkt der Kurve 604. Hierfür ergibt sich aus Fig. 5 eine belegte Bandbreite von ca. 1 MHz bis ca. 4,3 MHz. Die verbleibenden Teilkanäle, bzw. nicht belegten Frequenzbereiche bzw. Teilkanäle können nun anderen Sätzen von Teilkanälen zugeordnet werden. Im Frequenzbereiche von ca. 4,3 MHz bis 5,3 MHz zuzuordnen und für diesen zweiten Satz von Teilkanälen ein Codierverfahren mit einem Bitloadingfaktor von 3 anzuwenden woraus sich für diesen zweiten Satz von TEilkanälen eine Datenrate von ca. 3 Mbit/sec. ergibt. Dies ist in Fig. 6 als Verbindungslinie der Punkte 606 und 608 dargestellt.

Dadurch kann abhängig von der frequenzabhängigen Kabeldämpfung und indirekt der Kabellänge ein optimaler erster Bitloadingfaktor für den ersten Satz von Teilkanälen und ein optimaler zweiter Bitloadingfaktor für den zweiten Satz von Teilkanälen gefunden werden.

Aus dem Kurvenverlauf der parabelförmigen Kurve 604 in Fig. 6 ist erkennbar, daß bei Verzicht an (theoretischer) Übertragungsrate in einer Größenordnung von etwa 40 % die Implementierung von sehr einfachen Systemen mit niedrigen Bitloadingfaktoren und hoher Bandbreiteneffizienz (siehe Fig. 8 und 5) möglich wird. Die hohe Bandbreiteneffizienz dieser Systeme ermöglicht erfindungsgemäß durch Nutzung des nicht verwendeten oberen Frequenzbereichs eine Steigerung der Datenübertragungsrate auf Werte, bei denen herkömmliche Systeme um 2 höhere Bitloadingfaktoren erfordern würden. Beispielsweise ergibt sich bei einem maximalen Bitloadingfaktor von 6 für ein System mit vollständiger Vergleichmäßigung von Fig. 6 und Nutzung des oberen Frequenzbereichs (4,4 MHz ... 5,4 MHz, siehe Fig. 4) für ein Verfahren mit Bitloadingfaktor 3 eine Gesamtdatenrate von 20 Mbit/s + 3 Mbit/s = 23 Mbit/s (Punkt 608 in Fig. 6). Dies ist eine Rate, die bei herkömmlichen Systemen einen Bitloadingfaktor von 9, wie in Fig. 5 gezeigt, erfordert.

Die erfindungsgemäßen Vorrichtungen und Verfahren ermöglichen die effizientere Nutzung der Kanalkapazität von z. B. durch Rauschen gestörten Übertragungskanälen, bei denen das S/R- Verhältnis entweder monoton mit der Frequenz abnimmt, wie z. B. bei xDSL-Kanälen, oder innerhalb bestimmter Frequenzbereiche sich verschlechtert, wie z. B. in einem Funkkanal oder in verschiedenen speziellen Kabelkanälen mit besonderer Verkabelungsstruktur oder besonderer Beschaltung, insbesondere im Power-Line-Kanal, wodurch sich wesentliche Implementierungs- und Kostenvorteile ergeben.

**Patentansprüche**

1. Vorrichtung zum Senden von Informationen über eine Mehrzahl von Teilkanälen, die unterschiedliche Übertragungscharakteristika aufweisen und zusammen einen Übertragungskanal bilden, mit folgenden Merkmalen:

   einer Einrichtung zum Gruppieren (102) der Informationen in Zuordnung zu den Teilkanälen;

   einer Einrichtung zum Codieren (103a) von einem ersten Satz von Teilkanälen zugeordneten Informationen mittels eines ersten Codierverfahrens, um einen ersten Satz von codierten Informationssymbolen zu erhalten, wobei ein erstes codiertes Informationssymbol des ersten Satzes von codierten Informationssymbolen eine erste Informationsmenge zugeordnet hat;

   einer Einrichtung zum Codieren (103b) von einem zweiten Satz von Teilkanälen zugeordneten Informationen mittels eines zweiten Codierverfahrens, um einen zweiten Satz von codierten Informationssymbolen zu erhalten, wobei ein zweites codiertes Informationssymbol des zweiten Satzes von codierten Informationssymbolen eine zweite Informationsmenge zugeordnet hat, die sich von der ersten Informationsmenge unterscheidet;

   einer Einrichtung zum Kombinieren (104a) der codierten Informationssymbole des ersten Satzes gemäß einer ersten Kombinationsvorschrift, um einen ersten Satz von kombinierten codierten Informationssymbolen zu erzeugen, deren Anzahl gleich der Anzahl der Teilkanäle des ersten Satzes von Teilkanälen ist;

   einer Einrichtung zum Kombinieren (104b) der codierten Informationssymbole des zweiten Satzes gemäß einer zweiten Kombinationsvorschrift, um einen zweiten Satz von kombinierten codierten Informationssymbolen zu erzeugen, deren Anzahl gleich der Anzahl der Teilkanäle des zweiten Satzes von Teilkanälen ist; und

einer Einrichtung zum Zuordnen (106) der kombinierten codierten Informationssymbole des ersten Satzes zu dem ersten Satz von Teilkanälen, und zum Zuordnen der kombinierten codierten Informationssymbole des zweiten Satzes zu dem zweiten Satz von Teilkanälen, derart, daß jedem Teilkanal ein kombiniertes codiertes Informationssymbol zugeordnet ist, so daß jedem Teilkanal des ersten Satzes von Teilkanälen sämtliche Informationen der Informationssymbole des ersten Satzes zugeordnet sind, und daß jedem Teilkanal des zweiten Satzes von Teilkanälen sämtliche Informationen der Informationssymbole des zweiten Satzes zugeordnet sind,

wobei sowohl der erste als auch der zweite Satz von Teilkanälen zumindest einen Teilkanal aufweisen, dessen Signal/Rausch-Verhältnis ohne das Kombinieren kleiner als ein Grenz-Signal/Rausch-Verhältnis sein würde, das für das von dem Satz, zu dem dieser Teilkanal gehört, verwendete Codierverfahren minimal erforderlich ist, um eine vorbestimmte Zuverlässigkeit beim Decodieren der Informationssymbole zu erhalten, und dessen Signal-Rausch-Verhältnis aufgrund des Schritts des Kombinierens größer oder gleich dem Grenz-Signal/Rausch-Verhältnis ist.

2. Vorrichtung nach Anspruch 1, bei dem jedem Teilkanal des Übertragungskanals ein Träger mit einer eigenen Frequenz zugewiesen ist, bei der die Einrichtung zum Zuordnen eine Einrichtung (106) zum Aufprägen der kombinierten codierten Informationssymbole auf die entsprechenden Träger aufweist, um ein moduliertes Signal zu erzeugen, das die Folge von Informationssymbolen darstellt.

3. Vorrichtung nach Anspruch 1 oder 2, bei der das erste Codierverfahren (103a) ein Verfahren mit einer $2^x$-stufigen Quantelung des Signalraums ist, und bei dem das zweite Codierverfahren (103b) ein verfahren mit ein $2^{x-y}$-Quantelung des Signalraums ist, wobei gilt: x = 3, x > y.

4. Vorrichtung nach Anspruch 3, bei dem die Anzahl der Teilkanäle in einem Satz von Teilkanälen so gewählt ist, daß der Überschuß an Signal/Rausch-Verhältnis von Trägern in dem Satz im wesentlichen vollständig dazu verwendet wird, das Defizit an Signal/Rausch-Verhältnis des zumindest einen Teilkanals in dem Satz auszugleichen, derart, daß alle Teilkanäle in dem Satz ein Signal/Rausch-Verhältnis haben, das größer als das Grenzsignal/Rausch-Verhältnis ist und möglichst nahe an dem Grenz-Signal/Rausch-Verhältnis liegt.

5. Vorrichtung nach Anspruch 3 oder 4, bei dem der Übertragungskanal (108) eine Mehrzahl von Trägern mit Trägerfrequenzen von einer unteren Grenzfrequenz zu einer oberen Grenzfrequenz aufweist, wobei der erste Satz von Teilkanälen Trägerfrequenzen von der unteren Grenzfrequenz bis zu einschließlich einer Mittenfrequen2 aufweist, und wobei der zweite Satz von Teilkanälen Trägerfrequenzen oberhalb der Mittenfrequenz bis zu der oberen Grenzfrequenz aufweist, und wobei die Mittenfrequenz derart festgelegt wird, daß für den Parameter x = 3 das Signal/Rausch-Verhältnis des Trägers mit der Mittenfrequenz aufgrund des Kombinierens mit der ersten Kombinationsvorschrift (104a) am nächsten bei dem Grenz-Signal/Rausch-Verhältnis (300) für den ersten Satz von Teilkanälen ist, und wobei die obere Grenzfrequenz so festgelegt ist, daß das Signal/Rausch-Verhältnis des Trägers mit der Trägerfrequenz gleich der oberen Grenzfrequenz am nächsten bei dem Grenz-Signal/Rausch-Verhältnis für den zweiten Satz von Teilkanälen liegt.

6. Vorrichtung nach Anspruch 3, bei dem der Übertragungskanal eine Mehrzahl von Trägern mit Trägerfrequenzen von einer unteren Grenzfrequenz zu einer oberen Grenzfrequenz aufweist, wobei eine Anzahl von Einrichtungen zum Codieren vorhanden ist, und wobei eine gleich große Anzahl von Einrichtungen zum Kombinieren vorhanden ist, um die codierten Informationssymbole für die jeweiligen Sätze von Teilkanälen zu kombinieren, wobei diese Anzahl so gewählt ist, daß für den Satz, der die obere Grenzfrequenz aufweist, ein Codierverfahren mit einer gröbstmöglichen Quantelung in der entsprechenden Codiereinrichtung eingesetzt wird, und wobei zu kleineren Trägerfrequenzen hin immer ein um eine Stufe feineres Codierverfahren in einer entsprechenden Codiereinrichtung eingesetzt wird, so daß für den Träger bei der unteren Grenzfrequenz eine Codiereinrichtung eingesetzt wird, deren Quantelung maximal fein ist, derart, daß die Datenrate bezogen auf die gesamte Bandbreite des Kanals von der unteren Grenzfrequenz bis zur oberen Grenzfrequenz maximal ist.

7. Vorrichtung nach einem der vorhergehenden Ansprüche, die ferner eine Einrichtung zum Durchführen einer Vorwärtsfehlerkorrektur für Teilkanäle aufweist, wobei die Einrichtung zum Durchführen einer Vorwärtsfehlerkorrektur so ausgestaltet ist, daß ein Teil des Gewinns an Datenrate zu dem zumindest einen Teilkanal dazu verwendet wird, Redundanz in die Folge von Informationssymbolen einzufügen, während der Rest des Gewinns an Datenrate dazu verwendet wird, die Informationsrate zu erhöhen.

**8.** Vorrichtung nach einem der vorhergehenden Ansprüche, bei der die Übertragungscharakteristika der Teilkanäle, die das Grenz-Signal/Rausch-Verhältnis beeinflussen, bekannt sind, wobei die Informationsmengen der ersten und der zweiten Codiereinrichtung (103a, 103b) von vornherein festgelegt sind, um eine bestimmte Informationsrate übertragen zu können.

**9.** Vorrichtung nach einem der Ansprüche 1 bis 7, bei der die Übertragungscharakteristika der Teilkanäle, die das Grenz-Signal/Rausch-Verhältnis beeinflussen, grob abschätzbar sind, so daß die Informationsmengen und eine Zuweisung von Teilkanälen zu dem ersten und zweiten Satz von Teilkanälen so gewählt sind, daß die Signal/Rausch-Verhältnisse der Teilkanäle aufgrund des Kombinierens um einen Sicherheitsabstand über den geschätzten Grenz-Signal/Rausch-Verhältnissen für die Teilkanäle liegen.

**10.** Vorrichtung nach einem der vorhergehenden Ansprüche, bei der ein Teilkanal, von dem bekannt ist, daß er eine schlechte Übertragungscharakteristik hat, keinem Satz von Teilkanälen zugeordnet ist.

**11.** Vorrichtung nach einem der vorhergehenden Ansprüche, bei der die Teilkanäle gemäß ihrer im voraus bekannten Übertragungscharakteristika den Sätzen von Teilkanälen zugeordnet sind, so daß ein Satz von Teilkanälen Teilkanäle mit ähnlichen Übertragungscharakteristika aufweist.

**12.** Vorrichtung nach einem der Ansprüche 1 bis 10, die ferner eine Einrichtung zum dynamischen Erfassen des Übertragungskanals aufweist, und die ferner eine Einrichtung zum dynamischen Bestimmen der Informationsmenge, die durch die erste und zweite Codiereinrichtung (103a, 103b) zugewiesen wird, und zum dynamischen Zuweisen von Trägern zu dem ersten und zweiten Satz von Teilkanälen aufweist, so daß die Signal/Rausch-Verhältnisse der Teilkanäle aufgrund des Kombinierens immer größer oder gleich den Grenz-Signal/Rausch-Verhältnissen sind.

**13.** Vorrichtung gemäß Anspruch 2, bei der die Einrichtung (106) zum Aufprägen der kombinierten Informationssymbole auf die entsprechenden Träger eine Einrichtung zum Durchführen einer inversen diskreten Fourier-Transformation (IDFT) aufweist, welche bevorzugterweise in Form einer schnellen diskreten inversen Fourier-Transformation (Fast-DIFT) implementiert ist.

**14.** Vorrichtung gemäß einem der vorhergehenden Ansprüche, bei der die erste und die zweite Kombinationsvorschrift der Einrichtungen zum Kombinieren (104a, 104b) Kombinationsvorschriften zum im wesentlichen orthogonalen und im wesentlichen normierten, d. h. im wesentlichen orthonormalen oder unitären, Kombinieren der Informationssymbole ist.

**15.** Vorrichtung gemäß Anspruch 14, bei der die erste und die zweite Kombinationsvorschrift eine Hadarmard-Matrix oder eine Pseudo-Zufallsrauschen-Matrix (P) oder eine andere hinreichend orthonormale oder unitäre Matrix (P) sind, deren Matrixelemente den Betrag 1 oder näherungsweise den Betrag 1 aufweisen.

**16.** Vorrichtung zum Empfangen eines gesendeten Signals, das Informationen aufweist, wobei ein erster Satz von codierten Informationssymbolen des gesendeten Signals durch ein erstes Codierverfahren erzeugt ist, wobei das erste Codierverfahren einem codierten Informationssymbol des ersten Satzes von codierten Informationssymbolen eine erste Informationsmenge zugeordnet hat, und wobei ein zweiter Satz von codierten Informationssymbolen mittels eines zweiten Codierverfahrens erzeugt ist, wobei das zweite Codierverfahren einem codierten Informationssymbol des zweiten Satzes von codierten Informationssymbolen eine zweite Informationsmenge zugeordnet hat, die sich von der ersten Informationsmenge unterscheidet, wobei codierte Informationssymbole des ersten Satzes gemäß einer ersten Kombinationsvorschrift kombiniert sind, und wobei codierte Informationssymbole des zweiten Satzes gemäß einer zweiten Kombinationsvorschrift kombiniert sind, wobei kombinierte codierte Informationssymbole des ersten Satzes zu einem ersten Satz von Teilkanälen zugeordnet sind, und wobei kombinierte codierte Informationssymbole des zweiten Satzes zu einem zweiten Satz von Teilkanälen zugeordnet sind, wobei sowohl der erste als auch der zweite Satz von Teilkanälen zumindest einen Teilkanal aufweisen, dessen Signal/Rausch-Verhältnis ohne den Schritt des Kombinierens kleiner als ein Grenz-Signal/Rausch-Verhältnis sein würde, das für das von dem Satz, zu dem dieser Teilkanal gehört, verwendete Codierverfahren minimal erforderlich ist, um eine vorbestimmte Zuverlässigkeit beim Decodieren der Informationssymbole zu erhalten, und dessen Signal/Rausch-Verhältnis aufgrund des Schritts des Kombinierens größer oder gleich dem Grenz-Signal/Rausch-Verhältnis ist, mit folgenden Merkmalen:

einer Einrichtung zum Extrahieren (110) der kombinierten codierten Informationssymbole der Teilkanäle aus dem empfangenen Signal unter Verwendung der Teilkanäle;

einer ersten Einrichtung zum Verarbeiten (114a) der kombinierten codierten Informationssymbole des ersten Satzes unter Verwendung einer ersten Verarbeitungsvorschrift, die invers zu der ersten Kombinationsvorschrift ist, um die codierten Informationssymbole des ersten Satzes zu erhalten;

einer zweiten Einrichtung zum Verarbeiten (114b) der kombinierten codierten Informationssymbole des zweiten Satzes unter Verwendung einer zweiten Verarbeitungsvorschrift, die invers zu der zweiten Kombinationsvorschrift ist, um codierte Informationssymbole des zweiten Satzes zu erhalten;

einer ersten Einrichtung zum Decodieren (115a) der codierten Informationssymbole des ersten Satzes, um die Informationen, die den codierten Informationssymbolen des ersten Satzes zugeordnet sind, wiederzugewinnen,

wobei die erste Einrichtung zum Decodieren angeordnet ist, um auch den zumindest einen Teilkanal des ersten Satzes von Teilkanälen zu decodieren; und
einer zweiten Einrichtung zum Decodieren (115b) der codierten Informationssymbole des zweiten Satzes, um die Informationen, die den codierten Informationssymbolen des zweiten Satzes zugeordnet sind, wiederzugewinnen, wobei die zweite Einrichtung zum Decodieren angeordnet ist, um auch den zumindest einen Teilkanal des zweiten Satzes von Teilkanälen zu decodieren.

17. Vorrichtung gemäß Anspruch 16, bei der die Einrichtung (110) zum Extrahieren der kombinierten codierten Informationssymbole eine Einrichtung zum Durchführen einer diskreten Fourier-Transformation (DFT) aufweist, welche bevorzugterweise in Form einer schnellen Fourier-Transformation (FFT) implementiert ist.

18. Vorrichtung gemäß Anspruch 14 oder 15, bei der die erste und die zweite Kombinationsvorschrift eine Kombinationsvorschrift zum im wesentlichen orthogonalen und im wesentlichen normierten, d. h im wesentlichen orthonormierten oder unitären, Kombinieren der Informationssymbole sind, und bei der die erste und die zweite Verarbeitungsvorschrift Umkehrungen dieser Kombinationsvorschriften sind.

19. Vorrichtung gemäß Anspruch 18, bei der die erste und die zweite Verarbeitungsvorschrift eine inverse Hadarmard-Matrix oder eine inverse Pseudo-Zufallsrauschen-Matrix, oder eine andere hinreichend orthonormale oder unitäre zur Kombinationsvorschrift hinreichend inverse Matrix ist, deren Matrixelemente einen Betrag von 1 oder näherungsweise 1 aufweisen.

20. Vorrichtung gemäß einem der Ansprüche 14 bis 17, die ferner eine Einrichtung (112) zum Entzerren des empfangenen Signals aufweist, die derart ausgestaltet ist, daß sie die Amplituden der Signale der Teilkanäle normiert, wobei die Einrichtung zum Entzerren der Einrichtung (110) zum Extrahieren der kombinierten codierten Informationssymboie nachgeschaltet ist.

21. Verfahren zum Senden von Informationen über eine Mehrzahl von Teilkanälen, die unterschiedliche Übertragungscharakteristika aufweisen und zusammen einen Übertragungskanal bilden, mit folgenden Schritten:

Gruppieren (102) der Informationen in Zuordnung zu den Teilkanälen;

Codieren (103a) von einem ersten Satz von Teilkanälen zugeordneten Informationen mittels eines ersten Codierverfahrens, um einen ersten Satz von codierten Informationssymbolen zu erhalten, wobei ein erstes codiertes Informationssymbol des ersten Satzes von codierten Informationssymbolen eine erste Informationsmenge zugeordnet hat;

Codieren (103b) von einem zweiten Satz von Teilkanälen zugeordneten Informationen mittels eines zweiten Codierverfahrens, um einen zweiten Satz von codierten Informationssymbolen zu erhalten, wobei ein zweites codiertes Informationssymbol des zweiten Satzes von codierten Informationssymbolen eine zweite Informationsmenge zugeordnet hat, die sich von der ersten Informationsmenge unterscheidet;

Kombinieren (104a) der codierten Informationssymbole des ersten Satzes gemäß einer ersten Kombinationsvorschrift, um einen ersten Satz von kombinierten codierten Informationssymbolen zu erzeugen, deren Anzahl gleich der Anzahl der Teilkanäle des ersten Satzes von Teilkanälen ist;

Kombinieren (104b) der codierten Informationssymbole des zweiten Satzes gemäß einer zweiten Kombinationsvorschrift, um einen zweiten Satz von kombinierten codierten Informationssymbolen zu erzeugen, deren Anzahl gleich der Anzahl der Teilkanäle des zweiten Satzes von Teilkanälen ist; und

Zuordnen (106) der kombinierten codierten Informationssymbole des ersten Satzes zu dem ersten Satz von Teilkanälen, und zum Zuordnen der kombinierten codierten Informationssymbole des zweiten Satzes zu dem zweiten Satz von Teilkanälen, derart, daß jedem Teilkanal ein kombiniertes codiertes Informationssymbol zugeordnet ist, so daß jedem Teilkanal des ersten Satzes von Teilkanälen sämtliche Informationen der Informationssymbole des ersten Satzes zugeordnet sind, und daß jedem Teilkanal des zweiten Satzes von Teilkanälen sämtliche Informationen der Informationssymbole des zweiten Satzes zugeordnet sind,

wobei sowohl der erste als auch der zweite Satz von Teilkanälen zumindest einen Teilkanal aufweisen, dessen Signal/Rausch-Verhältnis ohne das Kombinieren kleiner als ein Grenz-Signal/Rausch-Verhältnis sein würde, das für das von dem Satz, zu dem dieser Teilkanal gehört, verwendete Codierverfahren minimal erforderlich ist, um eine vorbestimmte Zuverlässigkeit beim Decodieren der Informationssymbole zu erhalten, und dessen Signal-Rausch-Verhältnis aufgrund des Kombinierens größer oder gleich dem Grenz-Signal/Rausch-Verhältnis ist.

**22.** Verfahren zum Empfangen eines gesendeten Signals, das Informationen aufweist, wobei ein erster Satz von codierten Informationssymbolen des gesendeten Signals durch ein erstes Codierverfahren erzeugt ist, wobei das erste Codierverfahren einem codierten Informationssymbol des ersten Satzes von codierten Informationssymbolen eine erste Informationsmenge zugeordnet hat, und wobei ein zweiter Satz von codierten Informationssymbolen mittels eines zweiten Codierverfahrens erzeugt ist, wobei das zweite Codierverfahren einem codierten Informationssymbol des zweiten Satzes von codierten Informationssymbolen eine zweite Informationsmenge zugeordnet hat, die sich von der ersten Informationsmenge unterscheidet, wobei codierte Informationssymbole des ersten Satzes gemäß einer ersten Kombinationsvorschrift kombiniert sind, und wobei codierte Informationssymbole des zweiten Satzes gemäß einer zweiten Kombinationsvorschrift kombiniert sind, wobei kombinierte codierte Informationssymbole des ersten Satzes zu einem ersten Satz von Teilkanälen zugeordnet sind, und wobei kombinierte codierte Informationssymbole des zweiten Satzes zu einem zweiten Satz von Teilkanälen zugeordnet sind, wobei sowohl der erste als auch der zweite Satz von Teilkanälen zumindest einen Teilkanal aufweisen, dessen Signal/ Rausch-Verhältnis ohne den Schritt des Kombinierens kleiner als ein Grenz-Signal/Rausch-Verhältnis sein würde, das für das von dem Satz, zu dem dieser Teilkanal gehört, verwendete Codierverfahren minimal erforderlich ist, um eine vorbestimmte Zuverlässigkeit beim Decodieren der Informationssymbole zu erhalten, und dessen Signal/ Rausch-Verhältnis aufgrund des Schritts des Kombinierens größer oder gleich dem Grenz-Signal/Rausch-Verhältnis ist, mit folgenden Schritten:

Extrahieren (110) der kombinierten codierten Informationssymbole der Teilkanäle aus dem gesendeten Signal unter Verwendung der Teilkanäle;

Verarbeiten (114a) der kombinierten codierten Informationssymbole des ersten Satzes unter Verwendung einer ersten Verarbeitungsvorschrift, die invers zu der ersten Kombinationsvorschrift ist, um die codierten Informationssymbole des ersten Satzes zu erhalten;

Verarbeiten (114b) der kombinierten codierten Informationssymbole des zweiten Satzes unter Verwendung einer zweiten Verarbeitungsvorschrift, die invers zu der zweiten Kombinationsvorschrift ist, um codierte Informationssymbole des zweiten Satzes zu erhalten;

Decodieren (115a) der codierten Informationssymbole des ersten Satzes, um die Informationen, die den codierten Informationssymbolen des ersten Satzes zugeordnet sind, wiederzugewinnen, wobei die erste Einrichtung zum Decodieren angeordnet ist, um auch den zumindest einen Teilkanal des ersten Satzes von Teilkanälen zu decodieren; und

Decodieren (115b) der codierten Informationssymbole des zweiten Satzes, um die Informationen, die den codierten Informationssymbolen des zweiten Satzes zugeordnet sind, wiederzugewinnen, wobei die zweite Einrichtung zum Decodieren angeordnet ist, um auch den zumindest einen Teilkanal des zweiten Satzes von Teilkanälen zu decodieren.

**23.** Verfahren nach Anspruch 22, das ferner vor den Schritten des Verarbeitens folgenden Schritt aufweist:

Normieren (112) der Teilkanäle, derart, daß jeder Teilkanal nach dem Normieren die im wesentliche gleiche Leistung aufweist.

## Claims

1. A device for transmitting information over a plurality of partial channels which have different transmission characteristics and which together form a transmission channel, comprising:

   a unit for grouping (102) the information as assigned to the partial channels;

   a unit for coding (103a) information assigned to a first set of partial channels by means of a first coding method to obtain a first set of coded information symbols, where a first coded information symbol of the first set of coded information symbols has a first amount of information assigned to it;

   a unit for coding (103b) information assigned to a second set of partial channels by means of a second coding method to obtain a second set of coded information symbols, where a second coded information symbol of the second set of coded information symbols has a second amount of information assigned to it which differs from the first amount of information;

   a unit for combining (104a) the coded information symbols of the first set according to a first combination specification so as to generate a first set of combined coded information symbols equal in number to the number of partial channels of the first set of partial channels;

   a unit for combining (104b) the coded information symbols of the second set according to a second combination specification so as to generate a second set of combined coded information symbols equal in number to the number of partial channels of the second set of partial channels; and

   a unit for assigning (106) the combined coded information symbols of the first set to the first set of partial channels and for assigning the combined coded information symbols of the second set to the second set of partial channels in such a way that each partial channel has a combined coded information symbol assigned to it, that each partial channel of the first set of partial channels has the whole information of the information symbols of the first set assigned to it, and that each partial channel of the second set of partial channels has the whole information of the information symbols of the second set assigned to it,

   where both the first and the second set of partial channels have at least one partial channel whose signal-to-noise ratio without combining would be lower than a threshold signal-to-noise ratio that is minimally necessary for the coding method used by the set to which this partial channel belongs in order to achieve a predetermined reliability when decoding the information symbols, and whose signal-to-noise ratio as a result of combining is greater than or equal to the threshold signal-to-noise ratio.

2. A device according to claim 1, wherein each partial channel of the transmission channel has a carrier with its own frequency assigned to it and wherein the unit for assigning has a unit (106) for impressing the combined coded information symbols on the corresponding carriers so as to generate a modulated signal representing the sequence of information symbols.

3. A device according to claim 1 or 2, wherein the first coding method (103a) is a method with a $2^x$-stage quantization of the signal space and wherein the second coding method (103b) is a method with a $2^{x-y}$ quantization of the signal space, where $x = 3$, $x > y$.

4. A device according to claim 3, wherein the number of partial channels in a set of partial channels is so chosen that the excess in the signal-to-noise ratio of carriers in the set is essentially completely used to compensate for the deficit in the signal-to-noise ratio of the at least one partial channel in the set in such a way that all the partial channels in the set have a signal-to-noise ratio which is greater than the threshold signal-to-noise ratio and which is as close as possible to the threshold signal-to-noise ratio.

5. A device according to claim 3 or 4, wherein the transmission channel (108) has a plurality of carriers with carrier frequencies from a lower threshold frequency to a higher threshold frequency, where the first set of partial channels has carrier frequencies from the lower threshold frequency up to and including a middle frequency and where the second set of partial channels has carrier frequencies above the middle frequency up to the upper threshold frequency and where the middle frequency is so specified that for the parameter x = 3 the signal-to-noise ratio of the carrier with the middle frequency is closest to the threshold signal-to-noise ratio (300) for the first set of partial channels as a result of combining by means of the first combination specification (104a) and where the upper threshold frequency is so specified that the signal-to-noise ratio of the carrier with carrier frequency equal to the upper threshold frequency is closest to the threshold signal-to-noise ratio for the second set of partial channels.

6.  A device according to claim 3, wherein the transmission channel has a plurality of carriers with carrier frequencies from a lower threshold frequency to an upper threshold frequency, where there is a number of units for encoding and an equally large number of units for combining the coded information symbols for the respective sets of partial channels, the number being so chosen that, for the set with the upper threshold frequency, a coding method with the coarsest possible quantization is employed in the respective coding unit and where a coding method which is successively a stage finer for smaller carrier frequencies is employed in a respective coding unit, so that, for the carrier at the lower threshold frequency, a coding unit is employed whose quantization is as fine as possible, with the result that the data rate for the full bandwidth of the channel from the lower threshold frequency to the upper threshold frequency is a maximum.

7.  A device according to one of the preceding claims, which also has a unit for performing a forward error correction for partial channels, where the unit for performing a forward error correction is so designed that part of the gain in data rate to the at least one partial channel is used to introduce redundancy into the sequence of information symbols, whereas the rest of the gain in data rate is used to increase the information rate.

8.  A device according to one of the previous claims, wherein the transmission characteristics of the partial channels, which affect the threshold signal-to-noise ratio, are known, where the amounts of information of the first and the second coding unit (103a, 103b) are specified from the start in order to be able to transmit a certain information rate.

9.  A device according to one of the claims 1 to 7, wherein the transmission characteristics of the partial channels, which affect the threshold signal-to-noise ratio, can be estimated roughly, so that the amounts of information and an assignment of partial channels to the first and second set of partial channels are so chosen that, as a result of combining, the signal-to-noise ratios of the partial channels exceed the estimated threshold signal-to-noise ratios for the partial channels by a security margin.

10. A device according to one of the preceding claims, wherein a partial channel which is known to have a poor transmission characteristic is not assigned to any set of partial channels.

11. A device according to one of the preceding claims, wherein the partial channels are assigned to the sets of partial channels according to their transmission characteristics, which are known beforehand, so that a set of partial channels has partial channels with similar transmission characteristics.

12. A device according to one of the claims 1 to 10, which also has a unit for dynamically registering the transmission channel and which also has a unit for dynamically determining the amount of information which is assigned by the first and second coding unit (103a, 103b) and for dynamically assigning carriers to the first and second set of partial channels, so that, as a result of combining, the signal-to-noise ratios of the partial channels are always greater than or equal to the threshold signal-to-noise ratios.

13. A device according to claim 2, wherein the unit (106) for impressing the combined information symbols on the corresponding carriers has a unit for performing an inverse discrete Fourier transform (IDFT), which is preferably implemented in the form of a fast discrete inverse Fourier transform (fast DIET).

14. A device according to one of the preceding claims, wherein the first and the second combination specification of the units for combining (104a, 104b) are combination specifications for combining the information symbols in an essentially orthogonal and essentially normalized, i.e. in an essentially orthonormal or unitary, way.

15. A device according to claim 14, wherein the first and the second combination specification are a Hadamard matrix or a pseudo random noise matrix (P) or some other sufficiently orthonormal or unitary matrix (P) whose matrix elements are equal to or close to 1.

16. A device for receiving a transmitted signal with information, where a first set of coded information symbols of the transmitted signal is generated by a first coding method, where the first coding method has assigned a first amount of information to a coded information symbol of the first set of coded information symbols, and where a second set of coded information symbols is generated by a second coding method, where the second coding method has assigned a second amount of information, different from the first amount of information, to a coded information symbol of the second set of coded information symbols, where coded information symbols of the first set are combined according to a first combination specification and coded information symbols of the second set are combined according to a second combination specification, where combined coded information symbols of the first set are assigned to a first set of partial channels and where combined coded information symbols of the second set are assigned to a second set of partial channels, where both the first and the second set of partial channels have at least one partial channel whose signal-to-noise ratio without the step of combining would be lower than a threshold signal-to-noise ratio which is minimally necessary for the coding method used by the set to which this partial channel belongs in order to achieve a predetermined reliability when decoding the information symbols and whose signal-to-noise ratio with the step of combining is greater than or equal to the threshold signal-to-noise ratio, comprising:

a unit for extracting (110) the combined coded information symbols of the partial channels from the received signal using the partial channels;

a first unit for processing (114a) the combined coded information symbols of the first set using a first processing specification, which is the inverse of the first combination specification, so as to obtain the coded information symbols of the first set;

a second unit for processing (114b) the combined coded information symbols of the second set using a second processing specification, which is the inverse of the second combination specification, so as to obtain the coded information symbols of the second set;

a first unit for decoding (115a) the coded information symbols of the first set so as to recapture the information assigned to the coded information symbols of the first set, the first unit for decoding being designed to also decode the at least one partial channel of the first set of partial channels; and

a second unit for decoding (115b) the coded information symbols of the second set so as to recapture the information assigned to the coded information symbols of the second set, the second unit for decoding being designed to also decode the at least one partial channel of the second set of partial channels.

**17.** A device according to claim 16, wherein the unit (110) for extracting the combined coded information symbols has a unit for performing a discrete Fourier transform (DET), which is preferably implemented in the form of a fast Fourier transform (FFT).

**18.** A device according to claim 14 or 15, wherein the first and the second combination specification are combination specifications for combining the information symbols in an essentially orthogonal and essentially normalized, i.e. in an essentially orthonormalized or unitary, way, and wherein the first and the second processing specification are the inverses of these combination specifications.

**19.** A device according to claim 18, wherein the first and the second processing specification are inverse Hadamard matrices or inverse pseudo random noise matrices or some other sufficiently orthonormal or unitary matrices which are sufficiently inverse to the combination specification and whose matrix elements are equal to or close to 1.

**20.** A device according to claims 14 to 17, which also has a unit (112) for equalizing the received signal which is so designed that it normalizes the amplitudes of the signals of the partial channels, the unit for equalizing following the unit (110) for extracting the combined coded information symbols.

**21.** A method for transmitting information over a plurality of partial channels which have different transmission characteristics and together form a transmission channel, with the following steps:

grouping (102) the information as assigned to the partial channels;

coding (103a) information assigned to a first set of partial channels by means of a first coding method to obtain a first set of coded information symbols, where a first coded information symbol of the first set of coded information symbols has a first amount of information assigned to it;

coding (103b) information assigned to a second set of partial channels by means of a second coding method to obtain a second set of coded information symbols, where a second coded information symbol of the second set of coded information symbols has a second amount of information assigned to it which differs from the first amount of information;

combining (104a) the coded information symbols of the first set according to a first combination specification so as to generate a first set of combined coded information symbols equal in number to the number of partial channels of the first set of partial channels;

combining (104b) the coded information symbols of the second set according to a second combination specification so as to generate a second set of combined coded information symbols equal in number to the number of partial channels of the second set of partial channels; and

assigning (106) the combined coded information symbols of the first set to the first set of partial channels and assigning the combined coded information symbols of the second set to the second set of partial channels in such a way that each partial channel has a combined coded information symbol assigned to it, that each partial channel of the first set of partial channels has the whole information of the information symbols of the first set assigned to it, and that each partial channel of the second set of partial channels has the whole information of the information symbols of the second set assigned to it,

where both the first and the second set of partial channels have at least one partial channel whose signal-to-noise ratio without combining would be lower than a threshold signal-to-noise ratio that is minimally necessary for the coding method used by the set to which this partial channel belongs in order to achieve a predetermined reliability when decoding the information symbols, and whose signal-to-noise ratio as a result of combining is greater than or equal to the threshold signal-to-noise ratio.

22. A method for receiving a transmitted signal with information, where a first set of coded information symbols of the transmitted signal is generated by a first coding method, where the first coding method has assigned a first amount of information to a coded information symbol of the first set of coded information symbols, and where a second set of coded information symbols is generated by a second coding method, where the second coding method has assigned a second amount of information, different from the first amount of information, to a coded information symbol of the second set of coded information symbols, where coded information symbols of the first set are combined according to a first combination specification and coded information symbols of the second set are combined according to a second combination specification, where combined coded information symbols of the first set are assigned to a first set of partial channels and where combined coded information symbols of the second set are assigned to a second set of partial channels, where both the first and the second set of partial channels have at least one partial channel whose signal-to-noise ratio without the step of combining would be lower than a threshold signal-to-noise ratio which is minimally necessary for the coding method used by the set to which this partial channel belongs in order to achieve a predetermined reliability when decoding the information symbols and whose signal-to-noise ratio with the step of combining is greater than or equal to the threshold signal-to-noise ratio, with the following steps:

extracting (110) the combined coded information symbols of the partial channels from the transmitted signal using the partial channels;

processing (114a) the combined coded information symbols of the first set using a first processing specification, which is the inverse of the first combination specification, so as to obtain the coded information symbols of the first set;

processing (114b) the combined coded information symbols of the second set using a second processing specification, which is the inverse of the second combination specification, so as to obtain the coded information symbols of the second set;

decoding (115a) the coded information symbols of the first set so as to recapture the information assigned to the coded information symbols of the first set, the first unit for decoding being designed to also decode the at least one partial channel of the first set of partial channels; and

decoding (115b) the coded information symbols of the second set so as to recapture the information assigned to the coded information symbols of the second set, the second unit for decoding being designed to also decode the at least one partial channel of the second set of partial channels.

23. A method according to claim 22, which also has the following step preceding the processing steps:

normalizing (112) the partial channels in such a way that, following normalization, the value of the power is substantially the same for each partial channel.

## Revendications

1. Dispositif de transmission d'informations par une pluralité de canaux partiels présentant des caractéristiques de transmission différentes et constituant, ensemble, un canal de transmission, aux caractéristiques suivantes :

un dispositif destiné à regrouper (102) les informations en association aux canaux partiels ;
un dispositif destiné à coder (103a), à l'aide d'un premier procédé de codage, les informations associées à un premier jeu de canaux partiels, pour obtenir un premier jeu de symboles d'information codés, un premier symbole d'information codé du premier jeu de symboles d'information codés ayant une première quantité d'informations associées ;
un dispositif destiné à coder (103a), à l'aide d'un second procédé de codage, les informations associées à un second jeu de canaux partiels, pour obtenir un second jeu de symboles d'information codés, un second symbole d'information codé du second jeu de symboles d'information codés ayant une seconde quantité d'informations associées différente de la première quantité d'informations ;
un dispositif destiné à combiner (104a) les symboles d'information codés du premier jeu selon une première prescription de combinaison, pour générer un premier jeu de symboles d'information codés combinés dont le nombre est égal au nombre de canaux partiels du premier jeu de canaux partiels ;
un dispositif destiné à combiner (104b) les symboles d'information codés du second jeu selon une seconde prescription de combinaison, pour générer un second jeu de symboles d'information codés combinés dont le nombre est égal au nombre de canaux partiels du second jeu de canaux partiels ; et
un dispositif destiné à associer (106) les symboles d'information codés combinés du premier jeu au premier jeu de canaux partiels, et pour associer les symboles d'information codés combinés du second jeu au second jeu de canaux partiels, de sorte qu'à chaque canal partiel soit associé un symbole d'information codé combiné, de manière qu'à chaque canal partiel du premier jeu de canaux partiels soient associées toutes les informations des symboles d'information du premier jeu et qu'à chaque canal partiel du second jeu de canaux partiels soient associées toutes les informations des symboles d'information du second jeu,
tant le premier que le second jeu de canaux partiels présentant au moins un canal partiel dont le rapport signal/bruit serait, sans la combinaison, inférieur à un rapport signal/bruit limite minimal requis pour le procédé de codage utilisé par le jeu auquel appartient ce canal partiel, pour obtenir une fiabilité prédéterminée lors du décodage des symboles d'information et dont le rapport signal/bruit est, par suite de l'étape de combinaison. supérieur ou égal au rapport signal/bruit limite.

2. Dispositif selon la revendication 1, dans lequel est attribué à chaque canal partiel du canal de transmission une porteuse à fréquence propre, dans lequel le dispositif destiné à associer présente un dispositif (106) destiné à appliquer les symboles d'information codés combinés aux porteuses correspondantes, pour générer un signal modulé représentant la série de symboles d'information.

3. Dispositif selon la revendication 1 ou 2, dans lequel le premier procédé de codage (103a) est un procédé à quantification à $2^x$ étages de l'espace de signal et dans lequel le second procédé de codage (103b) est un procédé à quantification à $2^{x-y}$ étages de l'espace de signal, et où vaut : $x = 3$, $x > y$.

4. Dispositif selon la revendication 3, dans lequel le nombre de canaux partiels dans un jeu de canaux partiels est choisi de telle sorte que l'excédent de rapport signal/bruit de porteuses dans le jeu est sensiblement entièrement utilisé pour compenser le déficit de rapport signal/bruit de l'au moins un canal partiel dans le jeu, de sorte que tous les canaux partiels dans le jeu aient un rapport signal/bruit qui est supérieur au rapport signal/bruit limite et est le plus rapproché possible du rapport signal/bruit limite.

5. Dispositif selon la revendication 3 ou 4, dans lequel le canal de transmission (108) présente une pluralité de porteuses à fréquences de porteuse allant d'une fréquence limite inférieure à une fréquence limite supérieure, le premier jeu de canaux partiels présentant des fréquences de porteuse allant de la fréquence limite inférieure à y compris une fréquence moyenne et le second jeu de canaux partiels présentant des fréquences de porteuse au-dessus de la fréquence moyenne et allant jusqu'à la fréquence limite supérieure, la fréquence moyenne étant fixée de telle sorte que, pour le paramètre x = 3, le rapport signal/bruit de la porteuse à la fréquence moyenne soit, par suite de la combinaison selon la première prescription de combinaison (104a), le plus rapproché du rapport signal/bruit limite (300) pour le premier jeu de canaux partiels et la fréquence limite supérieure étant fixée de telle sorte que le rapport signal/bruit de la porteuse à la fréquence de porteuse égale à la fréquence limite supérieure soit le plus rapporché du rapport signal/bruit limite pour le second jeu de canaux partiels.

6.  Dispositif selon la revendication 3, dans lequel le canal de transmission présente une pluralité de porteuses à fréquences de porteuse allant d'une fréquence limite inférieure à une fréquence limite supérieure, un certain nombre de dispositifs de codage étant présents et un nombre identique de dispositifs de combinaison étant présents, pour combiner les symboles d'information codés pour les jeux de canaux partiels respectifs choisis de telle sorte que pour le jeu présentant la fréquence limite supérieure, un procédé de codage à quantification aussi grande que possible est utilisé dans le dispositif de codage correspondant, et à des fréquences de porteuse de plus en plus petites étant chaque fois utilisé un procédé de codage plus fin d'un étage dans un dispositif de codage correspondant, de sorte qu'il soit utilisé, pour la porteuse à la fréquence limite inférieure, un dispositif de codage dont la quantification est la plus fine, de manière que le taux de données, par rapport à la largeur de bande totale du canal, soit maximal de la fréquence limite inférieure à la fréquence limite supérieure.

7.  Dispositif selon l'une des revendications précédentes, présentant, par ailleurs, un dispositif destiné à effectuer une correction d'erreur directe des canaux partiels, le dispositif destiné à effectuer une correction d'erreur directe étant réalisé de telle sorte qu'une partie du gain de taux de données de l'au moins un canal partiel est utilisé pour ajouter de la redondance à la série de symboles d'information, tandis que le reste du gain de taux de données est utilisé pour augmenter le taux d'informations.

8.  Dispositif selon l'une des revendications précédentes, dans lequel les caractéristiques de transmission des canaux partiels ayant une influence sur le rapport signal/bruit limite sont connues, les quantités d'information du premier et du second dispositif de codage (103a, 103b) étant fixées dès le départ, pour pouvoir transmettre un taux d'information déterminé.

9.  Dispositif selon l'une des revendications 1 à 7, dans lequel les caractéristiques de transmission des canaux partiels ayant une influence sur le rapport signal/bruit limite peuvent être estimées approximativement, de sorte que les quantités d'informations et une attribution de canaux partiels au premier et au second jeu de canaux partiels sont choisies de telle sorte que les rapports signal/bruit des canaux partiels se situent, par suite de la combinaison, à une distance de sécurité au-dessus des rapports signal/bruit limites estimés des canaux partiels.

10. Dispositif selon l'une des revendications précédentes, dans lequel un canal partiel dont il est connu qu'il a une mauvaise caractéristique de transmission n'est pas associé à un jeu de canaux partiels.

11. Dispositif selon l'une des revendications précédentes, dans lequel les canaux partiels sont associés aux jeux de canaux partiels selon leurs caractéristiques de transmission connues d'avance, de sorte qu'un jeu de canaux partiels présente des canaux partiels à caractéristiques de transmission similaires.

12. Dispositif selon l'une des revendications 1 à 10, présentant, par ailleurs, un dispositif destiné à capter dynamiquement le canal de transmission et présentant, par ailleurs, un dispositif destiné à déterminer dynamiquement la quantité d'informations associée par le premier et le second dispositif de codage (103a, 103b), et à attribuer dynamiquement des porteuses au premier et au second jeu de canaux partiels, de sorte que les rapports signal/bruit des canaux partiels soient, par suite de la combinaison, toujours supérieurs ou égaux aux rapports signal/bruit limites.

13. Dispositif selon la revendication 2, dans lequel le dispositif (106) destiné à appliquer les symboles d'information combinés aux porteuses correspondantes présente un dispositif destiné à effectuer une transformation de Fourier discrète inverse (TFDI) mise en oeuvre, de préférence, sous forme de transformation de Fourier inverse discrète rapide (Fast-DIFT) (= TFID rapide).

14. Dispositif selon l'une des revendications précédentes, dans lequel la première et la seconde prescription de combinaison des dispositifs de combinaison (104a, 104b) sont des prescriptions de combinaison pour combiner les symboles d'information de manière sensiblement orthogonale et sensiblement normalisée, c'est-à-dire sensiblement orthonormale, ou unitaire.

**15.** Dispositif selon la revendication 14, dans lequel la première et la seconde prescription de combinaison sont une matrice de Hadamard ou une matrice de bruit pseudo-aléatoire (P) ou une autre matrice suffisamment orthonormale ou unitaire (P) dont les éléments de matrice présentent la valeur 1 ou approximativement la valeur 1.

**16.** Dispositif de réception d'un signal transmis présentant des informations, un premier jeu de symboles d'information codés du signal transmis étant généré par un premier procédé de codage, le premier procédé de codage ayant associé à un symbole d'information codé du premier jeu de symboles d'information codés une première quantité d'informations et un second jeu de symboles d'information codés étant généré par un second procédé de codage, le second procédé de codage ayant associé à un symbole d'information codé du second jeu de symboles d'information codés une seconde quantité d'informations différente de la première quantité d'informations, les symboles d'information codés du premier jeu étant combinés selon une première prescription de combinaison et les symboles d'information codés du second jeu étant combinés selon une seconde prescription de combinaison, les symboles d'information codés combinés du premier jeu étant associés à un premier jeu de canaux partiels et les symboles d'information codés combinés du second jeu étant associés à un second jeu de canaux partiels, tant le premier que le second jeu de canaux partiels présentant au moins un canal partiel dont le rapport signal/bruit serait, sans l'étape de combinaison, inférieur à un rapport signal/bruit limite requis minimal pour le procédé de codage utilisé par le jeu auquel appartient ce canal partiel, pour obtenir une fiabilité prédéterminée lors du décodage des symboles d'information et dont le rapport signal/bruit est, par suite de l'étape de combinaison, supérieur ou égal au rapport signal/bruit limite, aux caractéristiques suivantes :

un dispositif destiné à extraire (110) les symboles d'information codés combinés des canaux partiels du signal reçu, à l'aide des canaux partiels ;
un premier dispositif destiné à traiter (114a) les symboles d'information codés combinés du premier jeu à l'aide d'une première prescription de traitement inverse à la première prescription de combinaison, pour obtenir les symboles d'information codés du premier jeu ;
un second dispositif destiné à traiter (114b) les symboles d'information codés combinés du second jeu à l'aide d'une seconde prescription de traitement inverse à la seconde prescription de combinaison, pour obtenir les symboles d'information codés du second jeu ;
un premier dispositif destiné à décoder (115a) les symboles d'information codés du premier jeu, pour récupérer les informations associées aux symboles d'information codés du premier jeu, le premier dispositif de décodage étant disposé pour décoder également l'au moins un canal partiel du premier jeu de canaux partiels ; et
un second dispositif destiné à décoder (115b) les symboles d'information codés du second jeu, pour récupérer les informations associées aux symboles d'information codés du second jeu, le second dispositif de décodage étant disposé pour décoder également l'au moins un canal partiel du second jeu de canaux partiels.

**17.** Dispositif selon la revendication 16, dans lequel le dispositif destiné à extraire (110) les symboles d'information codés combinés présente un dispositif destiné à effectuer une transformation de Fourier discrète (TFD) mise en oeuvre, de préférence, sous forme de transformation de Fourier rapide (TFR).

**18.** Dispositif selon la revendication 14 ou 15, dans lequel la première et la seconde prescription de combinaison sont une prescription de combinaison pour combiner de manière sensiblement orthogonale et sensiblement normalisée, c'est-à-dire sensiblement orthonormale, ou unitaire les symboles d'information et dans lequel la première et la seconde prescription de traitement sont des inversions de ces prescriptions de combinaison.

**19.** Dispositif selon la revendication 18, dans lequel la première et la seconde prescription de traitement sont une matrice de Hadamard inverse ou une matrice de bruit pseudo-aléatoire inverse ou une autre matrice suffisamment orthonormale ou unitaire inverse par rapport à la prescription de combinaison, dont les éléments de matrice présentent la valeur 1 ou approximativement la valeur 1.

**20.** Dispositif selon l'une des revendications 14 à 17, présentant, par ailleurs, un dispositif (112) destiné à égaliser le signal reçu et réalisé de telle sorte qu'il normalise les amplitudes des signaux des canaux partiels, le dispositif d'égalisation étant connecté après le dispositif (110) destiné à extraire les symboles d'information codés combinés.

**21.** Procédé de transmission d'informations par une pluralité de canaux partiels présentant des caractéristiques de transmission différentes et constituant, ensemble, un canal de transmission, aux étapes suivantes consistant à :

regrouper (102) les informerions en association aux canaux partiels ;

coder (103a), à l'aide d'un premier procédé de codage, les informerions associées à un premier jeu de canaux partiels, pour obtenir un premier jeu de symboles d'information codés, un premier symbole d'information codé du premier jeu de symboles d'information codés ayant une première quantité d'informations associées ;

coder (103b), à l'aide d'un second procédé de codage, les informations associées à un second jeu de canaux partiels, pour obtenir un second jeu de symboles d'information codés, un second symbole d'information codé du second jeu de symboles d'information codés ayant une seconde quantité d'informations associées différente de la première quantité d'informations ;

combiner (104a) les symboles d'information codés du premier jeu selon une première prescription de combinaison, pour générer un premier jeu de symboles d'information codés combinés dont le nombre est égal au nombre de canaux partiels du premier jeu de canaux partiels ;

combiner (104b) les symboles d'information codés du second jeu selon une seconde prescription de combinaison, pour générer un second jeu de symboles d'information codés combinés dont le nombre est égal au nombre de canaux partiels du second jeu de canaux partiels ; et

associer (106) les symboles d'information codés combinés du premier jeu au premier jeu de canaux partiels, et associer les symboles d'information codés combinés du second jeu au second jeu de canaux partiels, de sorte qu'à chaque canal partiel soit associé un symbole d'information codé combiné, de manière qu'à chaque canal partiel du premier jeu de canaux partiels soient associées toutes les informerions des symboles d'information du premier jeu et qu'à chaque canal partiel du second jeu de canaux partiels soient associées toutes les informations des symboles d'information du second jeu,

tant le premier que le second jeu de canaux partiels présentant au moins un canal partiel dont le rapport signal/bruit serait, sans la combinaison, inférieur à un rapport signal/bruit limite minimal requis pour le procédé de codage utilisé par le jeu auquel appartient ce canal partiel, pour obtenir une fiabilité prédéterminée lors du décodage des symboles d'information et dont le rapport signal/bruit est, par suite de l'étape de combinaison, supérieur ou égal au rapport signal/bruit limite.

22. Procédé de réception d'un signal transmis présentant des informations, un premier jeu de symboles d'information codés du signal transmis étant généré par un premier procédé de codage, le premier procédé de codage ayant associé à un symbole d'information codé du premier jeu de symboles d'information codés une première quantité d'informations et un second jeu de symboles d'information codés étant généré par un second procédé de codage, le second procédé de codage ayant associé à un symbole d'information codé du second jeu de symboles d'information codés une seconde quantité d'informations différente de la première quantité d'informations, les symboles d'information codés du premier jeu étant combinés selon une première prescription de combinaison et les symboles d'information codés du second jeu étant combinés selon une seconde prescription de combinaison, les symboles d'information codés combinés du premier jeu étant associés à un premier jeu de canaux partiels et les symboles d'information codés combinés du second jeu étant associés à un second jeu de canaux partiels, tant le premier que le second jeu de canaux partiels présentant au moins un canal partiel dont le rapport signal/bruit serait, sans l'étape de combinaison, inférieur à un rapport signal/bruit limite minimal requis pour le procédé de codage utilisé par le jeu auquel appartient ce canal partiel, pour obtenir une fiabilité prédéterminée lors du décodage des symboles d'information et dont le rapport signal/bruit est, par suite de l'étape de combinaison, supérieur ou égal au rapport signal/bruit limite, aux étapes suivantes consistant à :

extraire (110) les symboles d'information codés combinés des canaux partiels du signal reçu, à l'aide des canaux partiels ;

traiter (114a) les symboles d'information codés combinés du premier jeu à l'aide d'une première prescription de traitement inverse à la première prescription de combinaison, pour obtenir les symboles d'information codés du premier jeu ;

traiter (114b) les symboles d'information codés combinés du second jeu à l'aide d'une seconde prescription de traitement inverse à la seconde prescription de combinaison, pour obtenir les symboles d'information codés du second jeu ;

décoder (115a) les symboles d'information codés du premier jeu, pour récupérer les informations associées aux symboles d'information codés du premier jeu, le premier dispositif de décodage étant disposé pour décoder également l'au moins un canal partiel du premier jeu de canaux partiels ; et

décoder (115b) les symboles d'information codés du second jeu, pour récupérer les informations associées aux symboles d'information codés du second jeu, le second dispositif de décodage étant disposé pour décoder également l'au moins un canal partiel du second jeu de canaux partiels.

**23.** Procédé selon la revendication 22, présentant par ailleurs, avant les étapes de traitement, l'étape suivante consistant à :

normaliser (112) les canaux partiels de telle sorte que chaque canal partiel présente, après la normalisation, sensiblement la même puissance.

Quelle — 100

102

COD1 — 103a
COD2 — 103b

KOMBI1 — 104a
KOMBI2 — 104b

IDFT — 106

SENDER

Kanal — 108

DFT — 110

Kanal-entzerrung — 112

KOMBI1$^{-1}$ — 114a
KOMBI2$^{-1}$ — 114b

DECOD1 — 115a
DECOD2 — 115b

116

$\underline{z}$

Senke — 118

EMPFÄNGER

Fig. 1

Fig. 2

Fig. 3

Fig. 4

Fig. 5

Fig. 6

Fig. 7 (Stand der Technik)

Fig. 8 (Stand der Technik)